# EUROPÄISCHE PATENTSCHRIFT

(11) **EP 3 042 710 B1**
(45) Veröffentlichungstag und Bekanntmachung des Hinweises auf die Patenterteilung: **22.05.2019**
(21) Anmeldenummer: 15196936.7
(22) Anmeldetag: 30.11.2015
(51) Int. Cl.: B01D 35/30, B01D 27/08

(54) **WECHSELFILTER EINER FILTERVORRICHTUNG FÜR FLUID UND FILTERVORRICHTUNG**
REPLACEABLE FILTER OF A FILTER DEVICE FOR FLUID AND FILTER DEVICE
FILTRE CHANGEABLE D'UN DISPOSITIF DE FILTRE POUR FLUIDE ET DISPOSITIF DE FILTRE

(30) Priorität: 12.01.2015 DE 102015000070
(43) Veröffentlichungstag der Anmeldung: 13.07.2016
(73) Patentinhaber: MANN + HUMMEL GMBH, 71636 Ludwigsburg (DE)
(72) Erfinder: Jokschas, Günter, 71540 Murrhardt (DE); Niemeyer, Stephan, 71711 Steinheim (DE)

(56) Entgegenhaltungen:
- EP-A1- 0 830 885
- EP-A1- 2 002 875
- EP-A1- 2 108 424
- WO-A1-2015/004097

## Beschreibung

### Technisches Gebiet

Die Erfindung betrifft einen Wechselfilter, insbesondere Spin-On Filter, einer Filtervorrichtung für Fluid, insbesondere Flüssigkeit, insbesondere Öl oder Kraftstoff, insbesondere einer Brennkraftmaschine, insbesondere eines Kraftfahrzeugs.

Ferner betrifft die Erfindung eine Filtervorrichtung für Fluid, insbesondere Flüssigkeit, insbesondere Öl oder Kraftstoff, insbesondere einer Brennkraftmaschine, insbesondere eines Kraftfahrzeugs.

Außerdem betrifft die Erfindung einen Filterkopf einer Filtervorrichtung, insbesondere einer erfindungsgemäßen Filtervorrichtung, für Fluid, insbesondere Flüssigkeit, insbesondere Öl oder Kraftstoff, insbesondere einer Brennkraftmaschine, insbesondere eines Kraftfahrzeugs, zum Anschluss wenigstens eines Wechselfilters, insbesondere eines erfindungsgemäßen Wechselfilters, insbesondere eines Spin-On Filters.

### Stand der Technik

Aus der EP 0 830 885 A1 ist eine Filtervorrichtung mit einem Filterkopf und einer Filterpatrone bekannt. Die Filterpatrone ist an dem Filterkopf befestigt. Der Filterkopf umfasst eine Mehrzahl von nach außen gerichteten ansteigenden Vorsprüngen, welche eine erste Komponente einer bajonettartigen Verbindung bilden. Die ansteigenden Vorsprünge sind zusammenwirkend mit ähnlichen Vorsprüngen der Filterpatrone zum Befestigen der Filterpatrone an dem Filterkopf.

Aus der EP 2 108 424 A1 ist ein Filterverschlusssystem bekannt, das einen Anschlusskopf und ein über eine Bajonettverbindung daran befestigtes Filtergehäuse aufweist, in dem auswechselbar ein Filterelement angeordnet ist. Die Bajonettverbindung hat gehäuseseitige Stege, die an einer radial äußeren Umfangsseite des Filtergehäuses vorliegen und wird durch Zusammenwirkung einer filtergehäuseseitigen Nocke mit einer anschlusskopfseitigen Raste gegen unbeabsichtigtes Lösen gesichert, wobei die Kraftwirkung der Nocke-Rastenkombination in axialer Richtung verläuft.

Aus der WO 2015/004097 A1 ist ein Wechselfilter bekannt, der über eine Bajonettverbindung mit einem Filterkopf verbindbar ist. Zur Sicherung gegen unbeabsichtigtes Lösen hat der Filterkopf an einem Innenumfang radial abragende Nasen, die in einem Verschlusszustand mit wechselfilterseitigen Rastarmen, die federnd befestigt sind, verrastbar sind. Bei dieser Konstruktion sind die erreichbaren Rastkräfte jedoch stark von der Rastarmgeometrie und vor allem den Werkstoffeigenschaften des Rastarms abhängig, so dass, insbesondere bei Verwendung von Kunststoffen, unter bestimmten Randbedingungen keine ausreichende Verrastung gegeben sein kann.

Der Erfindung liegt die Aufgabe zugrunde, einen Wechselfilter, eine Filtervorrichtung und einen Filterkopf der eingangs benannten Art zu gestalten, bei denen eine Befestigung des Wechselfilters an dem Filterkopf verbessert, insbesondere einfacher und/oder zuverlässiger realisiert, werden kann. Außerdem soll eine Stabilität der Verbindung des Wechselfilters mit dem Filterkopf verbessert werden. Ferner soll die Gefahr eines unkontrollierten Trennens der Verbindung des Wechselfilters mit dem Filterkopf verringert werden.

### Offenbarung der Erfindung

Die Aufgabe wird erfindungsgemäß dadurch gelöst, dass der Wechselfilter aufweist:
- ein Filtergehäuse, insbesondere einen Gehäusetopf, in welchem wenigstens ein Filterelement angeordnet ist oder sein kann,
- einen stirnseitig an dem Filtergehäuse angeordneten Anschlusskörper, welcher mit zumindest einer Fluidöffnung, insbesondere mit zumindest einer exzentrischen Fluidöffnung und mit einer mittigen Zentralöffnung, versehen ist,
- ein filterseitiges Verbindungsteil einer Verbindungseinrichtung zum lösbaren Verbinden des Wechselfilters mit einem Filterkopf der Filtervorrichtung,
- wenigstens ein filterseitiges Verriegelungsteil wenigstens einer Verriegelungseinrichtung zum lösbaren Verriegeln der Verbindungseinrichtung,
wobei das filterseitige Verbindungsteil mittels einer Steck-/Drehbewegung bzgl. einer Verbindungsachse mit dem Filterkopf lösbar verbindbar ist, wobei das wenigstens eine filterseitige Verriegelungsteil automatisch mittels der Steck-/Drehbewegung mit einem entsprechenden kopfseitigen Verriegelungsteil der Verriegelungseinrichtung lösbar verriegelbar ist und wobei wenigstens ein filterseitiges Verriegelungsteil wenigstens einen filterseitigen Rastabschnitt einer Rastverbindung zum Verrasten mit einem kopfseitigen Rastabschnitt eines kopfseitigen Verriegelungsteils der wenigstens einen Verriegelungseinrichtung in einem Verriegelungszustand aufweist und wenigstens einen Stützabschnitt auf der dem wenigstens einen filterseitigen Rastabschnitt bzgl. der Verbindungsachse radial abgewandten Seite des filterseitigen Verriegelungsteils aufweist zum mittelbaren oder unmittelbaren Abstützen des wenigstens einen filterseitigen Verriegelungsteils gegen wenigstens einen radial inneren gehäuseseitigen Umfangsabschnitt wenigstens in radialer Richtung wenigstens im Verriegelungszustand.

Der Wechselfilter kann auch als Spin-On Filter ausgelegt sein oder bezeichnet werden. Bei dem Wechselfilter ist wenigstens ein Filterelement in dem Gehäusetopf des Filtergehäuses angeordnet oder kann dort angeordnet werden. Der Wechselfilter kann komplett mit dem Filtergehäuse und dem darin enthaltenen wenigstens einen Filterelement ausgetauscht werden. Vorteilhafterweise kann das wenigstens eine Filterelement fest oder austauschbar in dem Filtergehäuse angeordnet sein. Das Filtergehäuse kann zerstörungsfrei öffenbar oder nicht zerstörungsfrei öffenbar sein.

Wenn im Folgenden von "radial", "axial", "umfangsmäßig", "tangential" oder dergleichen die Rede ist, so bezieht sich dies, sofern nicht anders beschrieben, auf die Verbindungsachse.

Erfindungsgemäß kann wenigstens ein filterseitiges Verriegelungsteil in der Schließposition der Verbindungseinrichtung mit wenigstens einem kopfseitigen Verriegelungsteil eine entriegelbare Verbindung eingehen. Das Schließen und/oder das Öffnen der entriegelbaren Verbindung kann vorteilhafterweise ohne den Einsatz von separaten Werkzeugen möglich sein. Das Verriegeln und Entriegeln der Verriegelungseinrichtung erfolgt automatisch beim Verbinden des Wechselfilters mit dem Filterkopf. Die Verriegelungseinrichtung dient als Verdrehsicherung. Die Verriegelungsteile halten den Wechselfilter im Betrieb und sichern ihn gegen unkontrolliertes Trennen, insbesondere Aufdrehen. Mittels der Verriegelungseinrichtung kann eine Öffnungskraft, insbesondere ein Öffnungsdrehmoment, zum Lösen der Verbindung des Wechselfilters mit dem Filterkopf vergrößert werden. Auf diese Weise kann die geschlossene Verbindungseinrichtung zumindest in ihrem Schließzustand mechanisch gesichert werden. So kann ein sicherer Betrieb des Wechselfilters gewährleistet werden.

Mit dem wenigstens einen filterseitigen Rastabschnitt kann das filterseitige Verriegelungsteil mit einem entsprechenden, insbesondere komplementären, kopfseitigen Rastabschnitt des entsprechenden kopfseitigen Verriegelungsteils verrasten. Beim Verrasten können sich die Rastabschnitte in Bezug auf eine Öffnungsdrehrichtung des Wechselfilters gegenüber dem Filterkopf gegenseitig hintergreifen. Um die Verrastung zum Öffnen der Verbindungseinrichtung zu überwinden, muss ein erhöhtes Öffnungsdrehmoment aufgebracht werden.

Erfindungsgemäß kann mittels dem wenigstens einen Stützabschnitt eine Stabilität der Verriegelungseinrichtung in der Verriegelungsposition verbessert werden. Die Öffnungskraft, insbesondere das Öffnungsdrehmoment, zum Lösen der Verbindung des Wechselfilters mit dem Filterkopf kann so weiter vergrößert werden. Ferner kann eine insbesondere manuelle Montage des Wechselfilters vereinfacht werden.

Vorteilhafterweise kann sich wenigstens ein Stützabschnitt mittelbar oder unmittelbar gehäuseseitig, insbesondere an dem Gehäusetopf, einem Deckel, insbesondere einem Deckelring, und/oder dem Anschlusskörper, abstützen.

Vorteilhafterweise kann wenigstens ein Teil einer Verriegelungseinrichtung Teil der Verbindungseinrichtung sein oder umgekehrt.

Die Verriegelungseinrichtung, insbesondere Rastverbindung, kann beim Verriegeln vorteilhafterweise ein insbesondere akustisch und/oder taktil erfassbares Signal erzeugen. Auf diese Weise kann der Schließzustand der Verbindungseinrichtung einfach erfasst werden.

Bei einer vorteilhaften Ausführungsform kann der wenigstens eine Stützabschnitt die übrigen Abschnitte des filterseitigen Verriegelungsteils wenigstens in der Verriegelungsposition der Verriegelungseinrichtung auf der Abstützseite, insbesondere radial außen oder radial innen, radial bzgl. der Verbindungsachse überragen. Auf diese Weise kann der wenigstens eine Stützabschnitt das wenigstens eine Verriegelungsteil einfach und kontrolliert gegen einen gehäuseseitigen Umfangsabschnitt abstützen. Der gehäuseseitige Umfangsabschnitt kann radial außerhalb des wenigstens einen filterseitigen Verriegelungsteils angeordnet sein. In diesem Fall befindet sich die Abstützseite an der radial äußeren Umfangsseite des filterseitigen Verriegelungsteils. Alternativ kann wenigstens ein Stützabschnitt so ausgestaltet sein, dass er sich radial innen an einem entsprechenden gehäuseseitigen radial inneren Umfangsabschnitt abstützen kann.

Bei einer weiteren vorteilhaften Ausführungsform kann wenigstens ein Stützabschnitt wenigstens in radialer Richtung bzgl. der Verbindungsachse elastisch, insbesondere federelastisch, sein. Auf diese Weise kann er einfach beim Verriegeln oder Entriegeln der Verriegelungseinrichtung entsprechend in radialer Richtung nachgeben.

Bei einer weiteren vorteilhaften Ausführungsform kann wenigstens ein Stützabschnitt auf der dem wenigstens einen filterseitigen Rastabschnitt bzgl. der Verbindungsachse radial etwa gegenüberliegenden Seite des entsprechenden filterseitigen Verriegelungsteils angeordnet sein und/oder angreifen und/oder wenigstens ein Stützabschnitt kann versetzt zu wenigstens einem filterseitigen Rastabschnitt des entsprechenden filterseitigen Verriegelungsteils angeordnet sein.

Bei gegenüberliegenden filterseitigen Rastabschnitten und Stützabschnitten können elastische Radialkräfte, die durch den wenigstens einen filterseitigen Rastabschnitt und den wenigstens einen Stützabschnitt realisiert werden können, besser zusammenwirken. So kann die Verriegelung verbessert werden.

Zwischen versetzt zueinander angeordneten Stützabschnitten und filterseitigen Rastabschnitten können zusätzlich elastische Abschnitte, insbesondere Armabschnitte, des filterseitigen Verriegelungsteils realisiert sein. Insgesamt kann durch die Wahl der Anordnung des wenigstens einen filterseitigen Rastabschnitts und des wenigstens einen Stützabschnitts eine Öffnungscharakteristik und/oder eine Schließcharakteristik der Verbindung des Wechselfilters mit dem Filterkopf beeinflusst werden.

Bei einer weiteren vorteilhaften Ausführungsform kann wenigstens ein Stützabschnitt als Fortsatz, insbesondere Stützarm, realisiert sein. Der Fortsatz kann sich vorteilhafterweise von dem filterseitigen Verriegelungsteil schräg entgegen der Schließdrehrichtung des Wechselfilters erstrecken. Auf diese Weise kann eine Schließkraft, insbesondere ein Schließdrehmoment, beim Verbinden des Wechselfilters mit dem Filterkopf im Verhältnis zu einer Öffnungskraft, insbesondere ein Öffnungsdrehmoment, zum Trennen des Wechselfilters von dem Filterkopf verringert werden.

Bei einer weiteren vorteilhaften Ausführungsform kann wenigstens ein Zwischenelement, insbesondere ein Zwischenring, vorgesehen sein, das bzgl. der Verbindungsachse radial zwischen wenigstens einem Stützabschnitt und einem gehäuseseitigen Umfangsabschnitt, insbesondere einem Umfangsabschnitt eines Gehäusedeckels und/oder des Anschlusskörpers, angeordnet sein kann.

An dem wenigstens einen Zwischenelement kann sich der wenigstens eine Stützabschnitt radial abstützen. Das wenigstens eine Zwischenelement kann sich seinerseits auf seiner dem wenigstens einen Stützabschnitt radial abgewandten Seite gehäuseseitig, insbesondere an einer Umfangsseite des Filtergehäuses, eines Deckels oder Deckelteils des Filtergehäuses und/oder dem Anschlusskörper, abstützen. Vorteilhafterweise kann wenigstens ein Zwischenelement zusätzlich eine weitere Funktion, insbesondere eine Dichtungsfunktion, erfüllen.

Bei einer weiteren vorteilhaften Ausführungsform kann wenigstens ein Zwischenelement elastisch oder starr sein. Durch entsprechende Vorgabe der Elastizität des wenigstens einen Zwischenelements kann eine Schließcharakteristik und/oder eine Öffnungscharakteristik der Verbindung des Wechselfilters mit dem Filterkopf weiter beeinflusst werden.

Bei einer weiteren vorteilhaften Ausführungsform kann wenigstens ein filterseitiges Verriegelungsteil wenigstens in radialer Richtung bzgl. der Verbindungsachse wenigstens teilweise elastisch sein. Auf diese Weise kann das wenigstens eine filterseitige Verriegelungsteil bei einem Verriegelungsvorgang oder Entriegelungsvorgang nach radial innen oder nach radial außen gebogen werden und so nachgeben. Das wenigstens eine filterseitige Verriegelungsteil kann dabei mittels wenigstens einem entsprechenden kopfseitigen Verriegelungsteil gebogen werden. Das kopfseitige Verriegelungsteil kann hierzu passend radial außen oder radial innen eine entsprechende umfangsmäßige Anlagefläche aufweisen. Die Elastizität erlaubt eine Rückkehr des wenigstens einen filterseitigen Verriegelungsteils in seinen Grundzustand. Mittels einer durch das Verformen, insbesondere Verbiegen, erzeugten mechanischen Vorspannung kann in einer Verriegelungsposition der Verriegelungseinrichtung das wenigstens eine filterseitige Verriegelungsteil eine radiale Gegenhaltekraft gegen ein entsprechendes kopfseitiges Verriegelungsteil bewirken. Mittels der radialen Gegenhaltekraft kann die erforderliche Öffnungskraft, insbesondere ein Öffnungsdrehmoment, zum Öffnen der Verbindung erhöht werden. So kann das wenigstens eine filterseitige Verriegelungsteil in seiner Verriegelungsposition relativ zu dem wenigstens einen kopfseitigen Verriegelungsteil gehalten werden.

Vorteilhafterweise kann wenigstens ein filterseitiges Verriegelungsteil gegenüber hohen Betriebstemperaturen, insbesondere Temperaturen von 200 °C und mehr, beständig sein. Auf diese Weise kann die Betriebssicherheit des Wechselfilters, insbesondere der Verriegelung, auch bei entsprechend hohen Betriebstemperaturen sichergestellt werden.

Vorteilhafterweise kann wenigstens ein filterseitiges Verriegelungsteil aus elastischem Material, insbesondere Metall und/oder Kunststoff, sein oder ein derartiges Material aufweisen. Metall kann eine hohe Temperaturbeständigkeit haben. Mit einem Verriegelungsteil aus Metall kann so die Betriebssicherheit des Wechselfilters auch bei hohen Betriebstemperaturen verbessert werden. Ferner kann durch Verwendung von Metall eine Ermüdung des wenigstens einen filterseitigen Verriegelungsteil verringert werden. So kann eine Standzeit erhöht werden. Ferner kann das wenigstens eine Verriegelungsteil auch wieder verwendet werden. Verriegelungsteile aus oder mit Kunststoff können einfach und preiswert realisiert werden.

Vorteilhafterweise kann wenigstens ein filterseitiges Verriegelungsteil Blech, Federstahl, Stahlblech mit Tiefzieheigenschaften oder ein anderes elastisches Metall aufweisen oder aus diesem bestehen.

Vorteilhafterweise kann wenigstens ein Verriegelungsteil einstückig oder mehrstückig sein. Wenigstens ein Rastabschnitt, wenigstens ein Stützabschnitt und gegebenenfalls wenigstens ein Armabschnitt und/oder eine Profilierung wenigstens eines Verriegelungsteils können einstückig oder mehrstückig sein.

Wenigstens ein insbesondere elastisches filterseitiges Verriegelungsteil kann einfach gemeinsam mit dem Wechselfilter ausgetauscht werden. So können Ermüdungserscheinungen an dem insbesondere elastischen und/oder beweglichen filterseitigen Verriegelungsteil, die durch mehrmaliges Öffnen und Schließen der Verbindungseinrichtung und entsprechendes Verriegeln und Entriegeln der Verriegelungseinrichtung auftreten können, vermieden werden. Das kopfseitige Verriegelungsteil kann vorteilhafterweise so ausgelegt sein, dass es eine entsprechend große Standzeit aufweist.

Vorteilhafterweise kann wenigstens ein filterseitiges Verriegelungsteil bzgl. der Verbindungsachse wenigstens in Umfangsrichtung, insbesondere in Umfangsrichtung und in axialer Richtung, im Vergleich zu seiner Flexibilität in radialer Richtung unflexibel sein. Das wenigstens eine filterseitige Verriegelungsteil kann in Drehrichtung des Gehäusetopfs um die Verbindungsachse relativ zum Filterkopf zugfest und/oder druckfest sein. So können mit dem wenigstens einen filterseitigen Verriegelungsteil Tangentialkräfte, insbesondere Zugkräfte oder Druckkräfte, von dem entsprechenden kopfseitigen Verriegelungsteil auf den Wechselfilter, insbesondere das Filtergehäuse, übertragen werden. Dadurch kann bei verriegelter Verriegelungseinrichtung verhindert werden, dass sich die Verbindungseinrichtung durch unkontrolliertes Drehen des Wechselfilters relativ zum Filterkopf in Öffnungsdrehrichtung lösen kann. In Kombination mit der insbesondere elastischen radialen Gegenhaltekraft des wenigstens einen filterseitigen Verriegelungsteils auf das wenigstens eine kopfseitige Verriegelungsteil kann eine entsprechend große Hebelkraft resultieren. Mit der Hebelkraft kann eine Stabilität der Verriegelung verbessert werden.

Ferner können insbesondere betriebsbedingte Belastungen auf das wenigstens eine filterseitige Verriegelungsteil in Umfangsrichtung bzgl. der Verbindungsachse besser kompensiert werden. Derartige betriebsbedingte Belastungen können insbesondere durch Vibrationen und/oder Druckunterschiede und/oder Temperaturunterschiede hervorgerufen werden.

Zusätzlich kann das wenigstens eine filterseitige Verriegelungsteil in axialer Richtung vergleichsweise unflexibel sein. Auf diese Weise kann vermieden werden, dass sich das wenigstens eine filterseitige Verriegelungsteil beim Anbau, beim Abbau oder beim Betrieb des Wechselfilters in axialer Richtung bzgl. der Verbindungsachse verformen, insbesondere verbiegen, kann.

Vorteilhafterweise kann wenigstens ein filterseitiges Verriegelungsteil mittelbar, insbesondere mittels dem Anschlusskörper und/oder einem Deckel oder Deckelring, mit dem Filtergehäuse, insbesondere dem Gehäusetopf, verbunden sein.

Das wenigstens eine filterseitige Verriegelungsteil kann vorteilhafterweise an der dem Filterkopf zugewandten Seite des Filtergehäuses, insbesondere des Anschlusskörpers, angeordnet sein.

Die entriegelbare Verbindung kann sich vorteilhafterweise außerhalb eines Innenraums des Wechselfilters befinden. Sie kann sich vorteilhafterweise an der Außenseite des Anschlusskörpers, insbesondere eines Deckels, des Wechselfilters befinden. Sie kann bei dem vom Filterkopf getrennten Wechselfilter von außen sichtbar sein. So kann vor der Montage des Wechselfilters erkannt werden, ob das wenigstens eine filterseitige Verriegelungsteil funktionsfähig, insbesondere unbeschädigt, ist.

Wenigstens ein filterseitiges Verriegelungsteil kann vorteilhafterweise den Anschlusskörper in axialer Richtung überragen.

Vorteilhafterweise kann wenigstens ein filterseitiges Verriegelungsteil an wenigstens einem separaten Befestigungselement, insbesondere einem Deckel oder Deckel(blech)ring, angeordnet sein. Das wenigstens eine separate Befestigungselement kann vorteilhafterweise mit dem Filtergehäuse, insbesondere dem Anschlusskörper und/oder dem Filterkopf, verbunden sein. Vorteilhafterweise kann wenigstens ein separates Befestigungselement formschlüssig und/oder materialschlüssig und/oder kraftschlüssig mit dem Filtergehäuse, insbesondere dem Anschlusskörper und/oder dem Filtertopf, verbunden sein. Wenigstens ein separates Befestigungselement kann vorteilhafterweise mittels einer Bördelverbindung mit dem Filtertopf verbunden sein.

Vorteilhafterweise kann die Verriegelungseinrichtung ein oder mehrere, insbesondere drei, filterseitige Verriegelungsteile aufweisen.

Vorteilhafterweise kann die Anzahl, die Anordnung und die Verteilung der filterseitigen Verriegelungsteile derjenigen der kopfseitigen Verriegelungsteile entsprechen. Auf diese Weise kann jedes filterseitige Verriegelungsteil mit einem entsprechenden kopfseitigen Verriegelungsteil jeweils passend zusammenwirken.

Vorteilhafterweise können mehrere filterseitige Verriegelungsteile bzgl. der Verbindungsachse umfangsmäßig, insbesondere gleichmäßig, verteilt angeordnet sein.

Vorteilhafterweise können mehrere Verriegelungsteile symmetrisch bzgl. der Verbindungsachse angeordnet sein. Auf diese Weise kann ein Anbau des Wechselfilters an den Filterkopf vereinfacht werden. Drei filterseitige Verriegelungsteile und entsprechende kopfseitige Verriegelungsteile können einfach symmetrisch angeordnet werden. Ferner ermöglichen drei Paarungen von Verriegelungsteilen eine gleichmäßige Kraftübertragung zwischen dem Wechselfilter und dem Filterkopf.

Bei einer weiteren vorteilhaften Ausführungsform können wenigstens ein filterseitiges Verriegelungsteil separat und/oder wenigstens zwei filterseitige Verriegelungsteile zusammenhängend, insbesondere einstückig zusammenhängend, mittelbar oder unmittelbar mit dem Filtergehäuse, insbesondere dem Anschlusskörper und/oder einen Deckel oder Deckelteil, verbunden sein.

Separate Verriegelungsteile können unabhängig voneinander hergestellt und montiert werden. Die Verriegelungsteile können einfach auch mit unterschiedlichen Eigenschaften, insbesondere Gestalten und/oder Materialien, versehen und/oder an unterschiedlichen Stellen angeordnet werden. Ferner können mit den separaten Verriegelungsteilen Kräfte unabhängiger voneinander übertragen werden. Die Art der Befestigung der separaten Verriegelungsteile mit dem Filtergehäuse können gleich, ähnlich oder unterschiedlich sein.

Mehrere zusammenhängende Verriegelungsteile können gemeinsam hergestellt und/oder montiert werden. So kann ein Montageaufwand vereinfacht werden.

Vorteilhafterweise können wenigstens ein filterseitiges Verriegelungsteil oder mehrere zusammenhängende Verriegelungsteile mittels materialschlüssigen und/oder formschlüssigen und/ oder kraftschlüssigen Verbindungen, insbesondere Passungen, Steckverbindungen, Klebeverbindungen, Schweißverbindungen, Lötverbindungen, Formverbindungen, Klemmverbindungen, I Pressverbindungen, Rastverbindungen, Dreh-/Steckverbindungen, insbesondere Schraubverbindungen und/oder bajonettartigen Verbindungen, oder dergleichen oder Kombinationen aus mehreren Verbindungsarten, mittelbar oder unmittelbar mit dem Filtergehäuse verbunden sein.

Vorteilhafterweise kann wenigstens ein Verriegelungsteil einteilig oder mehrteilig mittelbar oder unmittelbar mit dem Filtergehäuse verbunden sein.

Vorteilhafterweise kann wenigstens ein Verriegelungsteil als Mehrkomponentenbauteil, insbesondere Zweikomponentenbauteil, mit einem gehäuseseitigen Teil, insbesondere dem Anschlusskörper und/oder einem Gehäusedeckel, realisiert sein.

Vorteilhafterweise kann wenigstens ein Verriegelungsteil mittels einem Kunststoffformverfahren, insbesondere einem Kunststoffspritzprozess, an einem gehäuseseitigen Teil, insbesondere dem Anschlusskörper und/oder einem Gehäusedeckel, integriert werden.

Vorteilhafterweise kann wenigstens ein filterseitiges Verriegelungsteil wenigstens einen Halteabschnitt aufweisen, mit dem es mit einem gehäuseseitigen Teil, insbesondere dem Anschlusskörper, verbunden sein kann.

Vorteilhafterweise kann wenigstens ein Halteabschnitt des wenigstens einen filterseitigen Verriegelungsteils axial zur Verbindungsachse betrachtet wenigstens teilweise mit dem Anschlusskörper, dem Gehäusedeckel und/oder dem Filtergehäuse, insbesondere dem Gehäusetopf, überlappen. Auf diese Weise kann ein Hebelarm in axialer Richtung verkürzt werden. Eine Axialbelastung auf das filterseitige Verbindungsteil, insbesondere den Halteabschnitt, kann verringert werden. Vorteilhafterweise kann das wenigstens eine filterseitige Verriegelungsteil, insbesondere der Halteabschnitt, wenigstens teilweise in den Anschlusskörper, den Gehäusedeckel und/oder den Gehäusetopf eingepresst oder eingesteckt sein.

Wenigstens ein Halteabschnitt kann wenigstens einen Steckabschnitt oder Laschenabschnitt aufweisen, der in eine entsprechende Einstecköffnung, insbesondere eine ohnehin vorhandene Fluidöffnung, des gehäuseseitigen Teils, insbesondere des Anschlusskörpers und/oder des Gehäusedeckels, eingesteckt oder eingepresst werden kann.

Alternativ oder zusätzlich kann der wenigstens eine Halteabschnitt wenigstens eine Einstecköffnung für einen entsprechenden gehäuseseitigen Steckabschnitt oder Laschenabschnitt aufweisen. Wenigstens ein Steckabschnitt/Laschenabschnitt und/oder wenigstens eine Einstecköffnung können rund, oval und/oder eckig sein. Der Steckabschnitt/Laschenabschnitt und die entsprechende Einstecköffnung können die gleiche Form oder unterschiedliche Formen haben. Wenigstens eine Einstecköffnung und/oder wenigstens ein entsprechender Steckabschnitt/Laschenabschnitt kann rotationssymmetrisch, insbesondere rund, sein. Auf diese Weise kann der Steckabschnitt/Laschenabschnitt in unterschiedlichen Drehstellungen in der Einstecköffnung angeordnet werden. Alternativ oder zusätzlich können wenigstens eine Einstecköffnung und der entsprechende Steckabschnitt/Laschenabschnitt Asymmetrien bzgl. einer Rotation aufweisen, insbesondere oval oder eckig sein. Auf diese Weise kann der Steckabschnitt/Laschenabschnitt nur in entsprechend vorgegebenen Vorzugsstellungen in der Einstecköffnung insbesondere drehfest angeordnet werden.

Bei einer weiteren vorteilhaften Ausführungsform kann wenigstens ein filterseitiges Verriegelungsteil wenigstens einen insbesondere elastisch bewegbaren, insbesondere verformbaren, filterseitigen Rastabschnitt, insbesondere eine Rastnase, einen Hakenabschnitt oder einer Rastaufnahme, aufweisen.

Das entsprechende kopfseitige Verriegelungsteil kann eine entsprechenden, insbesondere komplementären, kopfseitigen Rastabschnitt, insbesondere eine Rastaufnahme, eine Rastnase oder einen Hakenabschnitt aufweisen. Der wenigstens eine kopfseitige Rastabschnitt kann elastisch oder starr sein. Die Verriegelungseinrichtung entriegelt sich indem wenigstens das filterseitige Verriegelungsteil, insbesondere der wenigstens eine filterseitigen Rastabschnitt, gegen seine elastische Vorspannkraft elastisch nachgeben kann. Auf diese Weise kann die Verriegelungseinrichtung einfach entriegelbar verriegelt werden.

Rastaufnahmen, insbesondere Rastvertiefungen, können vorteilhafterweise am kopfseitigen Verriegelungsteil einfach realisiert werden. Rastaufnahmen können als unbewegliche Bauteile realisiert werden und haben einen geringeren Verschleiß und eine geringeren Ermüdung als bewegliche Bauteile. Mit unbeweglichen Bauteilen können daher entsprechend hohe Standzeiten realisiert werden.

Wenigstens ein filterseitiger Rastabschnitt wenigstens eines filterseitigen Verriegelungsteils kann vorteilhafterweise in Umfangsrichtung bzgl. der Verbindungsachse vergleichsweise unflexibel sein. Auf diese Weise kann der entsprechende Zugbelastungen und/oder Druckbelastungen in Umfangsrichtung, insbesondere tangentialer Richtung, aufnehmen.

Wenigstens eines der filterseitigen Verriegelungsteile kann vorteilhafterweise einen elastischen Armabschnitt, insbesondere einen Federarm oder Federarmabschnitt, aufweisen. Ein Armabschnitt ist ein länglicher, sich im Wesentlichen frei erstreckender Abschnitt. Der Armabschnitt kann vorteilhafterweise bzgl. der Verbindungsachse elastisch, insbesondere federelastisch, nach radial außen und/oder radial innen gebogen werden.

An einem freien Ende des Armabschnitts kann vorteilhafterweise wenigstens ein filterseitiger Rastabschnitt angeordnet sein.

Vorteilhafterweise kann sich der Armabschnitt von einer gehäuseseitigen Befestigungsstelle, insbesondere einem Halteabschnitt des wenigstens einen Verriegelungsteils, in Schließdrehrichtung der Verbindungseinrichtung erstrecken. Auf diese Weise kann der Armabschnitt in Öffnungsdrehrichtung der Verriegelungseinrichtung auf Zug belastet werden. In Öffnungsdrehrichtung ist die mechanische Belastung auf die Verriegelungsteile größer als in Schließdrehrichtung. Ein auf Zug belasteter Armabschnitt ist mit größeren mechanischen Kräften belastbar als ein auf Druck belasteter Armabschnitt. Der Armabschnitt und somit das entsprechende filterseitige Verriegelungsteil können entsprechend einfacher, insbesondere kleiner, ausgestaltet und dimensioniert sein.

Bei einer weiteren vorteilhaften Ausführungsform kann wenigstens ein filterseitiges Verriegelungsteil mit wenigstens einer Profilierung, insbesondere mit Sicken und/oder Biegungen, versehen sein.

Mit wenigstens einer Profilierung kann die Stabilität und/oder Elastizität/Flexibilität des wenigstens einen filterseitigen Verriegelungsteils beeinflusst und angepasst werden. So können sowohl elastische, insbesondere federnde, Eigenschaften und blockierende Eigenschaften jeweils verbessert werden. Die elastischen Eigenschaften können bei der Montage oder Demontage des Wechselfilters benötigt werden, um die Verriegelung zu schließen oder freizugeben. Die blockierenden Eigenschaften können beim Betrieb des Wechselfilters erforderlich sein, um ein ungewolltes Öffnen der Verbindung zu verhindern und/oder betriebsbedingte Kräfte zu kompensieren. Ferner kann mittels der Profilierung eine Kraftübertragung verbessert werden. So können noch größere Kräfte aufgenommen werden.

Die wenigstens eine Profilierung kann durch Biegungen von entsprechenden Abschnitten, insbesondere Armabschnitten und/oder Stützabschnitten, des filterseitigen Verriegelungsteils realisiert sein. Mit den Biegungen können Sicken und/oder Erhöhungen realisiert werden.

Vorteilhafterweise kann sich wenigstens eine Profilierung in einer Ebene senkrecht zur Verbindungsachse befinden. Auf diese Weise kann die radiale Elastizität des wenigstens eine Verriegelungsteils und/oder seine geringere Flexibilität in Umfangsrichtung jeweils beeinflusst, insbesondere verbessert, werden.

Vorteilhafterweise kann sich wenigstens eine Profilierung zwischen einem Halteabschnitt, mit dem das Verriegelungsteil gehäuseseitig verbunden ist, und einem filterseitigen Rastabschnitt befinden. Zusätzlich oder alternativ kann sich wenigstens eine Profilierung zwischen einem filterseitigen Stützabschnitt und einem filterseitigen Rastabschnitt befinden. Zusätzlich oder alternativ kann sich wenigstens eine Profilierung zwischen einem filterseitigen Stützabschnitt und einem Halteabschnitt befinden. Wenigstens eine Profilierung kann sich auch innerhalb wenigstens eines Halteabschnitts, wenigstens eines Stützabschnitts, wenigstens eines Rastabschnitts und/oder wenigstens eines Armabschnitts befinden oder durch diesen wenigstens mitgebildet werden.

Vorteilhafterweise kann wenigstens ein filterseitiges Verbindungsteil an einer Fluidöffnung, insbesondere der mittigen Zentralöffnung, angeordnet sein.

Vorteilhafterweise kann das filterseitige Verbindungsteil mehrere filterseitige Verbindungsstege aufweisen. Die Verbindungsstege können in Umfangrichtung der Verbindungsachse verteilt wenigstens einer Fluidöffnung, insbesondere der Zentralöffnung, angeordnet sein. Die Verbindungsstege können radial nach innen ragen.

Vorteilhafterweise kann die Anzahl der filterseitigen Verbindungsstege mit der Anzahl der filterseitigen Verriegelungsteile übereinstimmen. Die filterseitigen Verbindungsstege und die filterseitigen Verriegelungsteile können einander zugeordnet sein.

Die Verbindungsstege können als Rampenabschnitte realisiert sein.

Vorteilhafterweise können die Verbindungsstege bzgl. der Verbindungsachse umfangsmäßig durchgängig sein. Die Verbindungsstege können bzgl. der Verbindungsachse umfangsmäßig auch Unterbrechungen aufweisen.

Wenigstens eine exzentrische Fluidöffnung kann vorteilhafterweise eine Fluidzulauföffnung sein. Durch die Fluidzulauföffnung kann das Fluid in einen Innenraum des Wechselfilters gelangen.

Der Anschlusskörper kann vorteilhafterweise eine Anschlussplatte und/oder ein(en) Deckelring, insbesondere ein Deckelblechring, sein oder aufweisen.

Das kopfseitige Verbindungsteil kann vorteilhafterweise als Anschlussstutzen ausgelegt sein. Das kopfseitige Verbindungsteil kann alternativ auch einen Abschnitt aufweisen, welcher die Funktion und/oder Form eines Anschlussstutzens hat.

Vorteilhafterweise kann die Verbindungseinrichtung wenigstens eine bzgl. der Verbindungsachse umfangsmäßige Innendichtung aufweisen.

Vorteilhafterweise kann die Innendichtung bzgl. der Verbindungsachse axial gegenüber dem filterseitigen Verbindungsteil zum Innenraum des Wechselfilters hin versetzt angeordnet sein.

Die Innendichtung kann vorteilhafterweise zu einer axialen Verspannung der Verbindungseinrichtung beitragen. Auf diese Weise können Vibrationen zwischen dem Wechselfilter und dem Filterkopf gedämpft werden. Eine etwaige Geräuschentwicklung, insbesondere ein Klappern, kann so verringert werden.

Die Innendichtung kann darüber hinaus auch als Aufdrehschutz wirken. Nach dem Verpressen der Innendichtung kann aufgrund der Reibung ein Drehen des Wechselfilters relativ zum Filterkopf entgegen der Schließdrehrichtung erschwert werden. So kann die Wahrscheinlichkeit verringert werden, dass sich die Verbindungseinrichtung unkontrolliert öffnet.

Vorteilhafterweise kann die Verbindungseinrichtung wenigstens eine bzgl. der Verbindungsachse umfangsmäßige Außendichtung aufweisen.

Der Wechselfilter kann vorteilhafterweise einen runden Querschnitt haben. Der Wechselfilter kann vorteilhafterweise koaxial zu einer Filterachse sein. Die Filterachse kann vorteilhafterweise mit der Verbindungsachse zusammenfallen. Der Wechselfilter kann vorteilhafterweise wenigstens ein Filterelement aufweisen. Das wenigstens eine Filterelement kann vorteilhafterweise ein umfangsmäßig geschlossenes Filtermedium aufweisen. Das Filtermedium kann vorteilhafterweise sternförmig oder zickzackförmig gefaltet sein. Das Filtermedium kann vorteilhafterweise an wenigstens einer Stirnseite mit einem Endkörper, insbesondere einer Endscheibe, dicht verbunden sein. Das Filterelement kann vorteilhafterweise koaxial zur Filterachse sein. Das Filterelement kann vorteilhafterweise einen Stützkörper aufweisen. Der Stützkörper kann vorteilhafterweise ein Mittelrohr sein. Das Mittelrohr kann sich vorteilhafterweise in einem Elementinnenraum des Filterelements befinden. Das Mittelrohr kann sich zwischen den Endkörpern erstrecken.

Vorteilhafterweise kann das filterseitige Verbindungsteil mit einem Deckelteil, insbesondere dem Anschlusskörper, zum Verschließen des Gehäuses des Wechselfilters ausgebildet sein. Das filterseitige Verbindungsteil kann vorteilhafterweise einstückig mit dem Deckelteil verbunden sein. Auf diese Weise kann ein Aufwand an Bauteilen verringert werden. Das Deckelteil kann vorteilhafterweise wenigstens einen Durchlass, insbesondere einen Einlass und/oder einen Auslass, für das Fluid in den Wechselfilter oder aus diesem heraus aufweisen. Das Deckelteil kann vorteilhafterweise mittels eines Fixierelements an einem weiteren Gehäuseteil, insbesondere dem Filtertopf, des Wechselfilters fixiert sein. Das Fixierelement kann vorteilhafterweise einen Blechring aufweisen, welcher mit dem weiteren Gehäuseteil verbunden werden kann. Der Blechring kann vorteilhafterweise mittels einer Bördelverbindung mit dem weiteren Gehäuseteil verbunden sein.

Vorteilhafterweise kann sich die Verbindungseinrichtung zwischen einer Rohseite und einer Reinseite eines Filterelements des Wechselfilters befinden. Die Verbindungseinrichtung kann so vorteilhafterweise innerhalb einer Außenabdichtung angeordnet sein, welche den fluidführenden Raum der Filtervorrichtung zur Umgebung hin abdichten kann. Eine Haltefunktion/Verbindungsfunktion der Verbindungseinrichtung und eine Dichtfunktion zwischen dem fluidführenden Raum der Filtervorrichtung und der Umgebung können so voneinander getrennt werden. So können die Haltefunktion/Verbindungsfunktion und die Dichtfunktion jeweils, insbesondere unabhängig voneinander, optimiert werden.

Die Aufgabe wird ferner mit der Filtervorrichtung erfindungsgemäß dadurch gelöst, dass die Filtervorrichtung wenigstens einen Wechselfilter, insbesondere einen erfindungsgemäßen Wechselfilter, insbesondere einem Spin-On Filter, umfasst, der aufweist:
- ein Filtergehäuse, insbesondere einen Gehäusetopf, in welchem wenigstens ein Filterelement angeordnet ist oder sein kann,
- einen stirnseitig an dem Filtergehäuse angeordneten Anschlusskörper, welcher mit zumindest einer Fluidöffnung, insbesondere mit zumindest einer exzentrischen Fluidöffnung und mit einer mittigen Zentralöffnung, versehen ist,
- ein filterseitiges Verbindungsteil einer Verbindungseinrichtung zum lösbaren Verbinden des Wechselfilters mit einem Filterkopf der Filtervorrichtung,
- wenigstens ein filterseitiges Verriegelungsteil wenigstens einer Verriegelungseinrichtung zum lösbaren Verriegeln der Verbindungseinrichtung,
wobei das filterseitige Verbindungsteil mittels einer Steck-/Drehbewegung bzgl. einer Verbindungsachse mit dem Filterkopf lösbar verbindbar ist, wobei das wenigstens eine filterseitige Verriegelungsteil automatisch mittels der Steck-/Drehbewegung mit einem entsprechenden kopfseitigen Verriegelungsteil der Verriegelungseinrichtung lösbar verriegelbar ist und wobei wenigstens ein filterseitiges Verriegelungsteil wenigstens einen filterseitigen Rastabschnitt einer Rastverbindung zum Verrasten mit einem kopfseitigen Rastabschnitt eines kopfseitigen Verriegelungsteils der wenigstens einen Verriegelungseinrichtung in einem Verriegelungszustand aufweist und wenigstens einen Stützabschnitt auf der dem wenigstens einen filterseitigen Rastabschnitt bzgl. der Verbindungsachse radial abgewandten Seite des filterseitigen Verriegelungsteils aufweist zum Abstützen des wenigstens einen filterseitigen Verriegelungsteils gegen wenigstens einen gehäuseseitigen Umfangsabschnitt wenigstens in radialer Richtung wenigstens im Verriegelungszustand.

Das wenigstens eine kopfseitige Verriegelungsteil kann vorteilhafterweise eine Führungsfläche aufweisen. Die Führungsfläche kann sich rampenartig in axialer Richtung erhöhen. Am Ende der Führungsfläche kann sich gegebenenfalls wenigstens ein kopfseitiger Rastabschnitt befinden. Bei der Drehbewegung zum Schließen der Verbindungseinrichtung kann wenigstens ein filterseitiger Rastabschnitt wenigstens eines filterseitigen Verriegelungsteils an der Führungsfläche des kopfseitigen Verriegelungsteils geführt werden.

Die Filtervorrichtung, insbesondere der Wechselfilter, ist geeignet zur Filtrierung von Fluid. Insbesondere können Flüssigkeiten, insbesondere Öl oder Kraftstoff, damit filtriert werden.

Die Filtervorrichtung, insbesondere der Wechselfilter, kann bei Brennkraftmaschinen von Kraftfahrzeugen eingesetzt werden. Sie kann auch bei andersartigen Brennkraftmaschinen, insbesondere Industriemotoren Verwendung finden. Die Erfindung kann auch außerhalb von Brennkraftmaschinen, insbesondere in der Kraftfahrzeugtechnik, eingesetzt werden.

Der Filterkopf kann vorteilhafterweise wenigstens einen Zulauf und/oder wenigstens einen Ablauf für das Fluid aufweisen. Der Filterkopf kann vorzugsweise fest an einem Rahmen fixiert sein. Der Rahmen kann insbesondere Teil der Brennkraftmaschine und/ oder des Kraftfahrzeugs sein.

Die Verbindungseinrichtung kann vorteilhafterweise mittels einer kombinierten Steckbewegung und Drehbewegung (Steck-/Drehbewegung) bzgl. einer Verbindungsachse schließbar und lösbar sein. Kombinierte Steck-/Drehverbindungen können einfach und schnell geschlossen und geöffnet werden. Ferner sind sie robust gegenüber Zugbelastungen in Richtung der Verbindungsachse. Mit der erfindungsgemäßen Verbindungseinrichtung kann so einfach ein Schnellverschluss realisiert werden, der einfach und schnell geschlossen und geöffnet werden kann.

Vorteilhafterweise kann die Verbindungseinrichtung wenigstens einen Anschlag aufweisen. Mit dem wenigstens einen Anschlag kann verhindert werden, dass die Verbindungsrichtung bei der Steck-/Drehbewegung über ihre Schließposition hinweg bewegt werden kann. Auf diese Weise kann die Schließposition präzise definiert werden.

Im Übrigen gelten die oben im Zusammenhang mit dem erfindungsgemäßen Wechselfilter und dessen vorteilhaften Ausgestaltungen aufgezeigten Vorteile und Merkmale für die erfindungsgemäße Filtervorrichtung und deren vorteilhafte Ausgestaltungen entsprechend und umgekehrt.

Die Aufgabe wird ferner mit dem Filterkopf erfindungsgemäß dadurch gelöst, dass der Filterkopf ein kopfseitiges Verbindungsteil aufweist mit einem Anschlussstutzen, mit dem ein filterseitiges Verbindungsteil eines Wechselfilters mittels einer Steck-/Drehbewegung bzgl. einer Verbindungsachse der Filtervorrichtung lösbar verbindbar ist, wobei das kopfseitige Verbindungsteil wenigstens einen Fluidkanal aufweist, der mit einer Fluidöffnung des Wechselfilters kommunizieren kann, der Filterkopf wenigstens ein kopfseitiges Verriegelungsteil wenigstens einer Verriegelungseinrichtung zum lösbaren Verriegeln der Verbindung des Wechselfilters mit dem Filterkopf aufweist, und der Filterkopf wenigstens einen kopfseitigen Umfangsstützabschnitt, insbesondere einen Außendichtabschnitt, aufweist zum Gegenhalten gegen wenigstens einen gehäuseseitigen Umfangsabschnitt des Wechselfilters, an welchem sich wenigstens ein filterseitiger Stützabschnitt wenigstens eines filterseitigen Verriegelungsteils wenigstens in radialer Richtung bzgl. der Verbindungsachse wenigstens im Verriegelungszustand abstützen kann.

Im Übrigen gelten die oben im Zusammenhang mit dem erfindungsgemäßen Wechselfilter und der erfindungsgemäße Filtervorrichtung und deren jeweiligen vorteilhaften Ausgestaltungen aufgezeigten Vorteile und Merkmale für den erfindungsgemäßen Filterkopf und dessen vorteilhafte Ausgestaltungen entsprechend und umgekehrt.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt eines Filtersystems für Motoröl einer Brennkraftmaschine eines Kraftfahrzeugs mit einem Filterkopf, an dem ein Wechselfilter mittels einer lösbaren Verbindungseinrichtung befestigt ist, wobei die Verbindungseinrichtung mittels einer Verriegelungseinrichtung gemäß einem ersten Ausführungsbeispiel lösbar verriegelt ist;
- Figur 2: eine isometrische Darstellung des Wechselfilters aus Figur 1, mit Blick auf die Verbindungsseite;
- Figur 3: eine Draufsicht auf die Verbindungsseite des Wechselfilters aus Figuren 1 und 2;
- Figur 4: eine isometrische Darstellung eines Wechselfilters für das Filtersystem aus Figur 1 mit einer Verriegelungseinrichtung gemäß einem zweiten Ausführungsbeispiel mit Blick auf die Verbindungsseite;
- Figur 5: eine isometrische Darstellung des Wechselfilters aus Figur 4 mit einem Teilschnitt des Filterkopfs;
- Figur 6: eine isometrische Darstellung eines Wechselfilters mit einer Verriegelungseinrichtung gemäß einem dritten Ausführungsbeispiel;
- Figur 7: eine isometrische Darstellung eines Wechselfilters mit einer Verriegelungseinrichtung gemäß einem vierten Ausführungsbeispiel mit einem Teilschnitt des Filterkopfs;
- Figur 8: eine isometrische Darstellung eines Wechselfilters mit einer Verriegelungseinrichtung gemäß einem fünften Ausführungsbeispiel;
- Figur 9: eine isometrische Darstellung des Wechselfilters aus Figur 8 mit einem Teilschnitt des Filterkopfs.

In den Figuren sind gleiche Bauteile mit gleichen Bezugszeichen versehen.

### Ausführungsform(en) der Erfindung

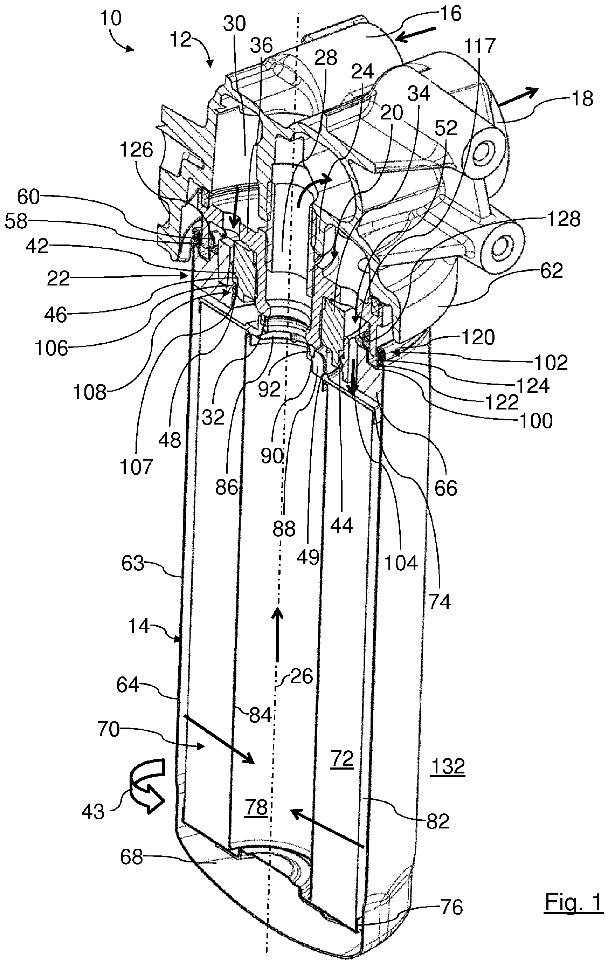

In den Figuren 1 bis 3 ist ein Filtersystem 10 für Motoröl einer Brennkraftmaschine eines Kraftfahrzeugs in unterschiedlichen Perspektiven, Schnitten und Detailansichten gezeigt.

Das Filtersystem 10 umfasst einen Filterkopf 12, an dem ein Wechselfilter 14 gemäß einem ersten Ausführungsbeispiel lösbar befestigt ist. Der Filterkopf 12 ist aus Metall. Der Filterkopf 12 ist fest mit der Brennkraftmaschine verbunden und dient als Anschlussteil für den Wechselfilter 14. Der Filterkopf 12 umfasst einen Einlass 16 und einen Auslass 18 für das Motoröl. Der Einlass 16 und der Auslass 18 sind in hier nicht weiter interessierender Weise mit entsprechenden Ölleitungen der Brennkraftmaschine verbunden.

Ferner verfügt der Filterkopf 12 über ein kopfseitiges Verbindungsteil 20 einer insgesamt mit 22 bezeichneten, lösbaren Verbindungseinrichtung zum Verbinden des Wechselfilters 14 mit dem Filterkopf. Das kopfseitige Verbindungsteil 20 ist aus Metall. Die dem Wechselfilter 14 zugewandte Seite des kopfseitigen Verbindungsteils 20 hat die Form und Funktion eines Anschlussstutzens. Das kopfseitige Verbindungsteil 20 ist in einen hohlen Anschlusszylinder 24 geschraubt, welcher einstückig mit dem Filterkopf 12 verbunden ist. Der Anschlusszylinder 24 weist ein Innengewinde auf. Der Anschlusszylinder 24 ist koaxial zu einer Filterachse 26. Das kopfseitige Verbindungsteil 20 kann statt als separates Bauteil an den Filterkopf 12 geschraubt auch einstückig mit diesem verbunden sein.

Wenn im Folgenden von "axial", "radial", "koaxial", "tangential" oder "umfangsmäßig" die Rede ist, so bezieht sich dies, sofern nicht anders erwähnt, auf die Filterachse 26.

Das kopfseitige Verbindungsteil 20 weist einen in axialer Richtung zweiteiligen zylindrischen Anschlusshülsenabschnitt 28 mit einem zu dem Innengewinde des Anschlusszylinders 24 passenden Außengewinde auf. Bei angebautem Wechselfilter 14 ist der Anschlusshülsenabschnitt 28 ebenfalls koaxial zur Filterachse 26.

Ein Innenraum des Anschlusshülsenabschnitts 28 ist mit dem Auslass 18 des Filterkopfs 12 verbunden. An seiner radial inneren Umfangsseite ist der Anschlusshülsenabschnitt 28 einfach abgestuft. Der Innenquerschnitt des Anschlusshülsenabschnitts 28 ist zu der dem Wechselfilter 14 zugewandten Seite zunächst erweitert, um sich dann zu verjüngen.

Der Anschlusszylinder 24 ist radial außen von einem Einlassringraum 30 des Filterkopfs 12 umgeben.

Eine dem Wechselfilter 14 zugewandte Stirnseite des Anschlusshülsenabschnitts 28 bildet eine ringförmige koaxiale Dichtfläche 32.

Der Anschlusshülsenabschnitt 28 des kopfseitigen Verbindungsteils 20 ist radial außen koaxial von einem runden Außenzylinderabschnitt 34 umgeben. Der Außenzylinderabschnitt 34 ist auf ein Außengewinde des Teils des Anschlusshülsenabschnitts 28 aufgeschraubt, der dem Wechselfilter 14 zugewandt ist. Ein radialer Ringscheibenabschnitt 36 des kopfseitigen Verbindungsteils 20 ist auf der dem Wechselfilter 14 abgewandten Seite einstückig mit dem Teil des Anschlusshülsenabschnitts 28 verbunden, der dem Wechselfilter 14 zugewandt ist.

An der radial äußeren Umfangsseite des Außenzylinderabschnitts 34 sind insgesamt drei kopfseitige Rampenabschnitte 42 angeordnet. Die kopfseitigen Rampenabschnitte 42 sind bzgl. ihrer Ausdehnungen und Form identisch. Die kopfseitigen Rampenabschnitte 42 verlaufen jeweils bzgl. der Filterachse 26 schraubenartig. Eine Steigungsrichtung der kopfseitigen Rampenabschnitte 42 entspricht einem bekannten Rechtsgewinde.

Eine Schließdrehrichtung 43 des Wechselfilters 14 relativ zum Filterkopf 12, welche in den Figuren 1 bis 3* durch einen Pfeil angedeutet ist, zum Schließen der Verbindungseinrichtung 22 entspricht der eines bekannten Rechtsgewindes. Die Schließdrehrichtung 43 verläuft vom Wechselfilter 14 auf den Filterkopf 12 in axialer Richtung betrachtet im Uhrzeigersinn.

Die kopfseitigen Rampenabschnitte 42 erstrecken sich jeweils etwa über einen Umfangswinkel von 240°. Die kopfseitigen Rampenabschnitte 42 sind zueinander versetzt angeordnet. Jeweils zwei der kopfseitigen Rampenabschnitte 42 überlappen sich jeweils über die Hälfte ihrer umfangsmäßigen Ausdehnungen. Die Anfänge der kopfseitigen Rampenabschnitte 42 befinden sich jeweils auf der dem Wechselfilter 14 zugewandten freien Stirnseite des Außenzylinderabschnitts 34. Die Enden der kopfseitigen Rampenabschnitte 42 sind umfangsmäßig jeweils dort, wo der entgegen der Schließdrehrichtung 43 betrachtet übernächste kopfseitige Rampenabschnitt 42 beginnt.

Jeder kopfseitige Rampenabschnitt 42 besteht umfangsmäßig betrachtet aus zwei Bereichen. Ein erster Bereich mit einer jeweiligen Einführrampenfläche 44 erstreckt sich umfangsmäßig vom Anfang eines jeweiligen kopfseitigen Rampenabschnitts 42 bis zum Anfang des entgegen der Schließdrehrichtung 43 betrachtet jeweils nächsten kopfseitigen Rampenabschnitts 42. Die Einführrampenflächen 44 sind von dem Wechselfilter 14 aus betrachtet in axialer Richtung frei zugänglich. Sie erstrecken sich jeweils in radialer Richtung und schraubenartig in Umfangsrichtung. Die Einführrampenflächen 44 erstrecken sich jeweils in radialer Richtung über die gesamte radiale Wanddicke des Außenzylinderabschnitts 34.

An die jeweilige Einführrampenfläche 44 schließt sich jeweils ein Bereich mit einer Nutrampenfläche 46 an. Die umfangsmäßige Erstreckung der Einführrampenfläche 44 entspricht der umfangsmäßigen Erstreckung der Nutrampenflächen 46. Sie erstrecken sich jeweils über einen Umfangswinkel von 120°. Die Nutrampenflächen 46 befinden sich radial außen an dem Außenzylinderabschnitt 34. Die Bereiche mit dem Nutrampenflächen 46 überlappen jeweils mit den entgegen der Schließdrehrichtung 43 betrachtet folgenden kopfseitigen Rampenabschnitten 42. Dabei überlappt sich jeweils die Nutrampenfläche 46 des in Schließdrehrichtung 43 betrachtet vorderen kopfseitigen Rampenabschnitts 42 mit der Einführrampenfläche 44 des folgenden kopfseitigen Rampenabschnitts 42. Die Nutrampenflächen 46 erstrecken sich in radialer Richtung etwa über die halbe radiale Wanddicke des Außenzylinderabschnitts 34. Die Einführrampenflächen 44 gehen stufenlos in die Nutrampenflächen 46 über. Die Nutrampenflächen 46 haben die gleiche Steigung wie die Einführrampenflächen 44. Die Nutrampenflächen 46 beginnen jeweils in Umfangsrichtung auf Höhe des Anfangs des jeweils im Uhrzeigersinn nachfolgenden kopfseitigen Rampenabschnitts 42. Die Nutrampenflächen 46 enden auf Höhe des Anfangs des umfangsmäßig jeweils übernächsten kopfseitigen Rampenabschnitts 42.

Die Nutrampenflächen 46 begrenzen eine jeweilige Rampennut 48 auf einer axialen Seite. Auf der axial gegenüberliegenden Seite werden die Rampennuten 48 jeweils durch eine der Einführrampenfläche 42 axial gegenüberliegende kopfseitige Haltefläche 49 des entsprechenden Bereichs der nachfolgenden kopfseitigen Rampenabschnitts 42 begrenzt. Die Rampennuten 48 haben eine in Umfangsrichtung konstante axiale Ausdehnung. Ihre radiale Ausdehnung ist in Umfangsrichtung betrachtet ebenfalls konstant.

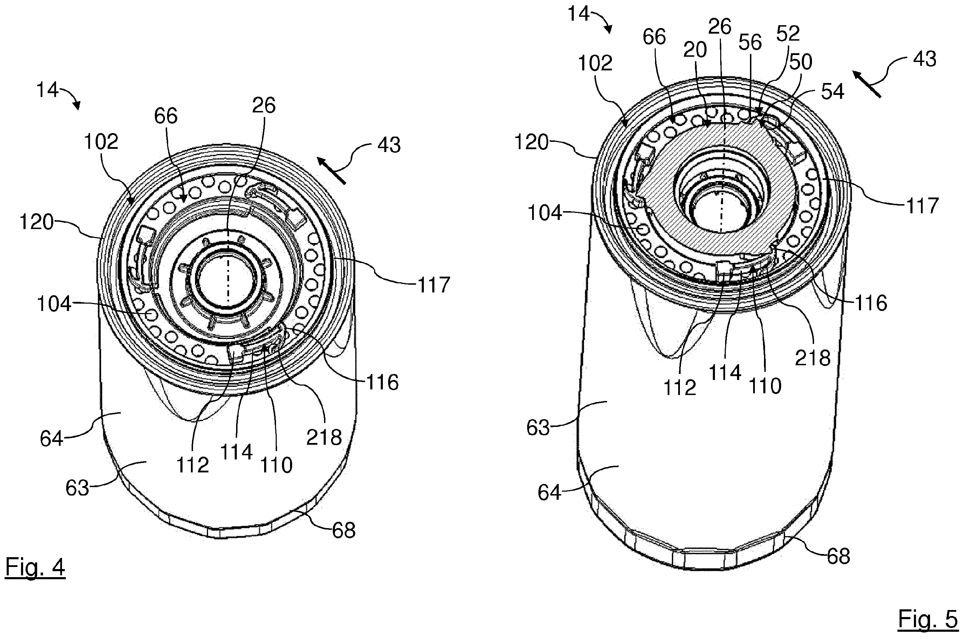

An die radial äußere Umfangsseite des Außenzylinderabschnitts 34 sind drei kopfseitige Rastelemente 50 einer insgesamt mit 52 bezeichneten Verriegelungseinrichtung der Verbindungseinrichtung 22 angeordnet. Die Rastelemente 50 sind in den Figuren 5, 7 und 9 im Zusammenhang mit weiter unten beschriebenen weiteren Ausführungsbeispielen gezeigt. Die Rastelemente 50 sind jeweils einstückig mit dem Außenzylinderabschnitt 34 verbunden. Die Rastelemente 50 sind radiale Erhebungen. Die Rastelemente 50 sind in axialer Richtung zum Filterkopf 12 hin betrachtet vor dem radialen Ringscheibenabschnitt 36 angeordnet.

Die Rastelemente 50 sind jeweils etwa keilartig. In einem bzgl. der Schließdrehrichtung 43 der Verbindungseinrichtung 22 hinteren Bereich weist jedes Rastelement 50 eine ansteigende Führungsfläche 54 auf. Die Führungsfläche 54 befindet sich an der radial äußeren Umfangsseite der Rastelemente 50. Am Ende der Führungsfläche 54 schließt sich jeweils eine kopfseitige Rastvertiefung 56 an. Die radiale Ausdehnung der Rastelemente 50 ist jeweils im Bereich der Rastvertiefung 54 kleiner als im Bereich des in radialer Richtung erhöhten Endes der Führungsfläche 54. Jedes Rastelement 50 erstreckt sich umfangsmäßig über einen Umfangswinkel von etwa 25° bis 30°. Der Übergang von der Führungsfläche 54 zur entsprechenden Rastvertiefung 56 befindet sich umfangsmäßig betrachtet etwa auf einer Höhe mit dem Ende eines der kopfseitigen Rampenabschnitte 42 und dem Anfang des entsprechend entgegen der Schließdrehrichtung 43 betrachtet übernächsten kopfseitigen Rampenabschnitts 42.

Der Anschlusszylinder 24 und der kopfseitige Verbindungsteil 20 sind von einem koaxialen kreiszylindrischen Außendichtabschnitt 58 umgeben. Die freie Stirnseite des Außendichtabschnitts 58 ist dem Wechselfilter 14 zugewandt. Sein Innenquerschnitt vergrößert sich zu seiner freien Stirnseite hin. Die radial innere Umfangsseite des Außendichtabschnitts 58 bildet eine Außendichtfläche 60.

Ferner weist der Filtertopf 12 einen Außenkragen 62 auf, der sich abschnittsweise koaxial zur Filterachse 26 erstreckt und den Außendichtabschnitt 58 radial außen teilumfänglich umgibt.

Der Wechselfilter 14 ist als Spin-On Filter mit einem runden Querschnitt ausgelegt. Er ist im Wesentlichen koaxial zur Filterachse 26. Der Wechselfilter 14 weist ein Filtergehäuse 63 mit einem Filtertopf 64 auf, in dessen offener Seite ein Filterdeckel 66 befestigt ist. Der Filtertopf 64 hat einen nach außen gewölbten Filterboden 68.

In dem Filtertopf 64 ist ein koaxiales Filterelement 70 angeordnet. Das Filterelement 70 verfügt über ein zickzackförmig gefaltetes, umfangsmäßig geschlossenes Filtermedium 72. An seinen Stirnseiten ist das Filtermedium 72 jeweils dicht mit einer Anschlussendscheibe 74, in der Figur 1 oben, und einer Gegenendscheibe 76, unten, verbunden.

Die Anschlussendscheibe 74 befindet sich auf der dem Filterdeckel 66 zugewandten Seite des Filterelements 70. Das Filtermedium 72 umgibt einen Elementinnenraum 78 des Filterelements 70. Der Elementinnenraum 78 befindet sich auf einer Reinseite des Filterelements 70.

Die Gegenendscheibe 76 verschließt den Elementinnenraum 78 auf der dem Filterboden 68 zugewandten Stirnseite des Filterelements 70. An der dem Filterboden 78 zugewandte Außenseite der Gegenendscheibe 76 stützen sich mehrere, in den Figuren verdeckte Federelemente ab, die sich andererseits am Federboden 68 abstützen.

Das Filterelement 70 ist radial außen von einem rohseitigen Ringraum 82 umgeben, der von der radial inneren Umfangsseite des Filtertopfs 64 begrenzt wird.

Im Elementinnenraum 78 erstreckt sich ein koaxiales Mittelrohr 84 zwischen der Gegenendscheibe 76 und der Anschlussendscheibe 74. Eine Umfangswand des Mittelrohrs 84 ist für das Motoröl durchlässig. Eine radial innere Umfangsseite, nämlich radial innere Faltkanten, des Filtermediums 72 stützt sich an der radial äußeren Umfangsseite des Mittelrohrs 84 ab.

Die Anschlussendscheibe 74 weist eine koaxiale Auslassöffnung 86 für das filtrierte Motoröl auf. An der axial äußeren Seite der Anschlussendscheibe 74 ist einstückig ein koaxialer Dichtungsaufnahmezylinder 88 angeordnet. Eine radial innere Umfangsseite des Dichtungsaufnahmezylinders 88 ist abgestuft. Auf seiner dem Elementinnenraum 78 abgewandten Stirnseite weist der Dichtungsaufnahmezylinder 88 eine koaxiale Dichtungsnut 90 mit einer ringförmigen Innendichtung 92 auf. Die Innendichtung 92 ist bzgl. der Filterachse 26 axial gegenüber einem filterseitigen Verbindungsteil 108 zum Innenraum des Wechselfilters 14 hin versetzt angeordnet. Die Innendichtung 92 ist als Flachdichtung ausgelegt. Bei montiertem Wechselfilter 14 liegt die Innendichtung 92 mit ihrer dem Elementinnenraum 78 abgewandten Seite dicht an der Dichtfläche 32 des Anschlusshülsenabschnitts 28 des kopfseitigen Verbindungsteils 20 an. Die Innendichtung 92 wirkt in axialer Richtung. Die Innendichtung 92 trennt eine Rohseite des Filterelements 70, radial außerhalb des Dichtungsaufnahmezylinders 88, dicht von einer Reinseite, radial innerhalb des Dichtungsaufnahmezylinders 88. Der kleinste Innenradius des Dichtungsaufnahmezylinders 88 entspricht etwa dem Innenradius des Anschlusshülsenabschnitts 28 auf seiner angrenzenden freien Stirnseite.

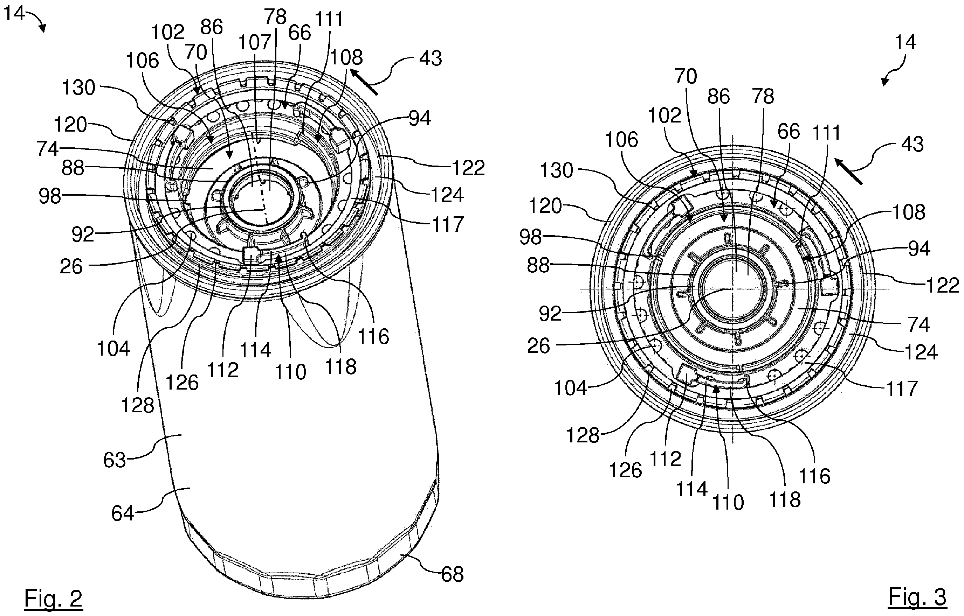

Radial außen ist der Dichtungsaufnahmezylinder 88 mit in den Figuren 2 und 3 gezeigten Stützelementen 94 gegen den sich radial erstreckenden Abschnitt der Anschlussendscheibe 74 abgestützt. Die Stützelemente 94 erstrecken sich jeweils radial und axial. An der radial inneren Umfangsseite des Dichtungsaufnahmeabschnitts 88 sind ferner innere Stützelemente vorgesehen, welche einen Ringabschnitt des Dichtungsaufnahmezylinders 88, der die Dichtungsnut 90 radial innen umgibt, abstützten.

Der Filterdeckel 66 hat die Form eines Rings mit einem etwa rechteckigen Profil. Der Filterdeckel 66 ist aus Kunststoff. Der Filterdeckel 66 hat die Funktion einer Anschlussplatte zum Verbinden des Wechselfilters 14 mit dem Filterkopf 12. Der Filterdeckel 66 weist eine beispielsweise in der Figur 2 gezeigte, zur Filterachse 26 koaxiale Aufnahmeöffnung 98 auf zur Aufnahme des Außenzylinderabschnitts 34 des kopfseitigen Verbindungsteils 20. Innerhalb des radial äußeren Randes des Filterdeckels 66 ist an der dem Filterboden 68 abgewandten Außenseite eine koaxiale Ringnut 100 angeordnet zur Aufnahme eines Kragens 122 eines Deckelblechrings 102. Radial zwischen der Ringnut 100 und der Aufnahmeöffnung 98 ist eine Vielzahl von durchgängigen Einlasskanälen 104 angeordnet. Die Einlasskanäle 104 erstrecken sich jeweils parallel zur Filterachse 46. Sie verbinden den Einlassringraum 30 des Filterkopfs 12 mit dem Innenraum des Filtertopfs 64, respektive dem rohseitigen Ringraum 82.

An der radial inneren Umfangsseite des Filterdeckels 66 sind drei filterseitige Rampenabschnitte 106 angeordnet. Die Rampenabschnitte 106 realisieren jeweils Verbindungsstege. Die filterseitigen Rampenabschnitte 106 erstrecken sich jeweils von der radial inneren Umfangsseite des Filterdeckels 66 nach radial innen. Die filterseitigen Rampenabschnitte 106 sind in ihrer Ausdehnung und ihrem umfangsmäßigen Verlauf im Wesentlichen identisch. Die dem Innenraum des Filtertopfs 64 zugewandten Seiten der filterseitigen Rampenabschnitte 106 bilden jeweils filterseitige Halteflächen 107. Die dem Innenraum des Filtertopfs 64 abgewandten Seiten der filterseitigen Rampenabschnitte 106 bilden jeweils filterseitige Zuführrampen. Die filterseitigen Halteflächen 107 und die Zuführrampen verlaufen etwa parallel zueinander. Die filterseitigen Rampenabschnitte 106 erstrecken sich jeweils, analog zu den kopfseitigen Rampenabschnitten 42, schraubenartig bzgl. der Filterachse 26. Ihre Steigungen entsprechen denen der kopfseitigen Rampenabschnitte 42. Die filterseitigen Rampenabschnitte 106 erstrecken sich jeweils bzgl. der Filterachse 26 über einen Umfangswinkel von 120°. Die filterseitigen Rampenabschnitte 106 überlappen sich nicht. Die Anfänge 111 der filterseitigen Rampenabschnitte 106 befinden sich auf der dem Innenraum des Filtertopfs 64 axial abgewandten Seite. Die Anfänge 111 sind bei montiertem Wechselfilter 14 dem Filterkopf 12 zugewandt. Die Anfänge 111 sind zu einem dem Elementinnenraum 78 abgewandten, kopfseitigen, die Auslassöffnung 86 umgebenden radial inneren Rand des Filterdeckels 66 beabstandet. Umfangsmäßig betrachtet befindet sich der Anfang 111 jedes filterseitigen Rampenabschnitts 106 auf einer Höhe mit dem Ende des in Schließdrehrichtung 43 vorhergehenden filterseitigen Rampenabschnitts 106. Die axialen Höhen der filterseitigen Rampenabschnitte 106 sind umfangsmäßig konstant. Sie entsprechen den axialen Höhen der Rampennuten 48 der kopfseitigen Rampenabschnitte 42. Die filterseitigen Rampenabschnitte 106 und die Aufnahmeöffnung 98 bilden insgesamt ein filterseitiges Verbindungsteil 108 der Verbindungseinrichtung 22.

An der dem Innenraum des Filtertopfs 64 abgewandten Außenseite des Filterdeckels 66 sind drei separate filterseitige Rastfederelemente 110 angeordnet, die in Figuren 2 und 3 gezeigt sind. Die Rastfederelemente 110 sind aus Federblech geformt. Die Rastfederelemente 110 sind filterseitige Verriegelungsteile der Verriegelungseinrichtung 52. Die Rastfederelemente 110 verfügen jeweils über einen Halteabschnitt 112. Die Halteabschnitte 112 sind jeweils radial zwischen der Ringnut 100 und der Aufnahmeöffnung 98 in einen entsprechenden der Einlasskanäle 104 des Filterdeckels 66 eingepresst, der als Einstecköffnung dient. Jeder Halteabschnitt 112 hat mit dem Filterdeckel 66 einen axialen Überlapp. Die Einstecköffnungen der Einlasskanäle 104 haben exemplarisch einen runden Querschnitt. Sie können auch oval, eckig oder andersförmig sein.

Ein jeweiliger Federarmabschnitt 114 der Rastfederelemente 110 ist einstückig mit dem Halteabschnitt 112 verbunden. Die Federarmabschnitte 114 befinden sich in Schließdrehrichtung 43 betrachtet jeweils an der Vorderseite der Halteabschnitte 112. Die Federarmabschnitte 114 erstrecken sich umfangsmäßig jeweils über einen Umfangswinkel von etwa 30°. Die Federarmabschnitte 114 können an den Halteabschnitten 112 in radialer Richtung elastisch federnd nach außen gebogen werden. In Längsrichtung der Federarmabschnitte 114, also in tangentialer Richtung oder Umfangsrichtung, und in axialer Richtung sind die Rastfederelemente 110 unflexibel. Die Rastfederelemente 110 sind so gegenüber Zugkräften oder Druckkräften in Umfangsrichtung belastbar."

An ihren den Halteabschnitten 112 jeweils abgewandten freien Ende gehen die Federarmabschnitte 114 jeweils in eine hakenartige Rastnase 116 über. Die Rastnasen 116 erstrecken sich nach radial innen. Die Rastnasen 116 befinden sich umfangsmäßig betrachtet jeweils auf Höhe eines Anfangs 111 einer der filterseitigen Rastabschnitte 106 und eines Endes des jeweils vorherigen filterseitigen Rampenabschnitts 106.

Radial außen sind die Federarmabschnitte 114 als Stützabschnitte 118 ausgebildet. Mit den Stützabschnitten 118 stützen sich die Rastfederelemente 110 nach radial außen gegen einen koaxialen Zwischenring 117 ab. Der Zwischenring 117 umgibt die Rastfederelemente 110 umfangsmäßig zusammenhängend. In den Bereichen der Halteabschnitte 112 der Rastfederelemente 110 weist der Zwischenring 117 an seiner radial inneren Umfangsseite jeweils eine Einbuchtung auf. Der Zwischenring 117 ist aus einem elastischen Material. Er kann aber auch starr sein.

Der Deckelblechring 102 weist ein mehrfach gebogenes Profil auf. Mit seiner radial äußeren Umfangsseite ist er mittels einer Bördelverbindung 120 fest mit einem freien Rand des Filtertopfs 64 verbunden. Radial innerhalb der Bördelverbindung 120 weist der Deckelblechring 102 einen etwa rechtwinkligen, umfangsmäßig zusammenhängend verlaufenden erste Biegeabschnitt auf. Im Bereich des ersten Biegeabschnitts bildet der Deckelblechring 102 auf seiner dem Filterdeckel 66 zugewandten Seite den Kragen 122, der in die Ringnut 100 des Filterdeckels 66 eingreift.

Auf der dem Filterdeckel 66 abgewandten Außenseite des Deckelblechrings 102 realisiert der Kragen 122 eine Aufnahmenut 124 für den Außendichtabschnitt 58 des Filterkopfs 12.

Die radial innere Umfangsseite des Deckelblechrings 102 ist zu einem U-förmigen Profil gebogen, dessen Öffnung nach radial außen zeigt. Das U-förmige Profil beinhaltet eine koaxiale, umfangsmäßig zusammenhängend verlaufende Dichtungsnut 126. In der Dichtungsnut 126 ist eine Außendichtung 128 angeordnet. Die Außendichtung 128 ist eine O-Ring-Dichtung. Die Außendichtung 128 ist bzgl. der Filterachse 26 nach radial außen orientiert. Die Außendichtung 128 wirkt in radialer Richtung.

An seinem dem Filterdeckel 66 axial abgewandten Innenrand kann der Deckelblechring 102 umfangmäßig verteilt eine Mehrzahl von Einkerbungen 130 aufweisen. In den Figuren 4 bis 9 ist der Deckelblechring 102 hingegen geschlossen ausgebildet. An der radial inneren Umfangsseite des Deckelblechring 102 liegt der Zwischenring 117 an. Die Rastfederelemente 110 stützen sich so über ihre Stützabschnitte 118 jeweils mittelbar über den Zwischenring 117 an der gehäuseseitigen inneren Umfangsseite des Deckelblechrings 102 nach radial außen ab. Auf diese Weise wird die radiale elastische Rückstellkraft bei Auslenkungen des entsprechenden Rastfederelements 110 aus seiner Grundstellung in die Verriegelungsstellung erhöht. Damit erhöht sich die Haltekraft der Verriegelungseinrichtung 52.

Bei montiertem Wechselfilter 14 liegt die Außendichtung 128 dicht an der Außendichtfläche 60 des Außendichtabschnitts 58 an. Die Außendichtung 128 trennt die Rohseite des Filterelements 70, respektive den Einlassringraum 30, von der Umgebung 132.

Zum Verbinden mit dem Filterkopf 12 wird der Wechselfilter 14 mit dem Filterdeckel 66 voran axial zu einer Verbindungsachse, welche in dem Ausführungsbeispiel mit der Filterachse 26 zusammenfällt, in einer Steckbewegung zunächst zu dem kopfseitigen Verbindungsteil 20 des Filterkopfs 12 hin bewegt. Der Außenzylinderabschnitt 34 wird in die Aufnahmeöffnung 98 des Filterdeckels 66 soweit eingesteckt, bis die filterseitigen Rampenabschnitte 106 axial an den Einführrampenflächen 44 der kopfseitigen Rampenabschnitte 42 anstoßen. Der Außendichtabschnitt 58 befindet sich axial entfernt von der Außendichtung 128.

Mit einer Drehbewegung des Wechselzylinders 14 in Schließdrehrichtung 43 wird der filterseitige Verbindungsteil 108 in den kopfseitigen Verbindungsteil 20 eingeschraubt. Dabei greifen die filterseitigen Rampenabschnitte 106 jeweils in eine der Rampennuten 48 ein. Nach einem Drehwinkel von 60° vom Beginn des Eintauchens der filterseitigen Rampenabschnitte 106 in die Rampennuten 48 beginnt die Außendichtung 128 an der Außendichtfläche 60 des Außendichtabschnitts 58 anzuliegen und wird beim Weiterdrehen des Wechselfilters 14 in dem querschnittserweiterten Eingangsbereich geführt.

Nach einer weiteren Drehung um 60° stoßen die in Schließdrehrichtung 43 vorderen Enden der filterseitigen Rampenabschnitte 106 an den hinteren Enden der Rampennuten 48 an. Die Enden der Rampennuten 48 bilden Anschläge, mit denen im Schließzustand der Verbindungseinrichtung 22 ein Weiterdrehen des Wechselfilters 14 verhindert wird.

Im Schließzustand der Verbindungseinrichtung 22 liegt die Innendichtung 92 dicht und in axialer Richtung zusammengepresst an der Dichtfläche 32 des Anschlusshülsenabschnitts 28 an.

In einer Endphase der Schließbewegung stoßen ferner die Rastnasen 116 der Federarmabschnitte 114 der Rastfederelemente 110 jeweils an die in Schließdrehrichtung 43 hinteren Enden der Führungsflächen 54 der Rastelemente 50 an. Bei dem Weiterdrehen des Wechselfilters 14 in Schließdrehrichtung 43 werden die Rastnasen 116 an den Führungsflächen 54 geführt. Die Federarmabschnitte 114 mit den Rastnasen 116 werden dabei elastisch nach radial außen gedrückt. Dabei stützen sich die Stützabschnitte 118 an dem Zwischenring 117 in radialer Richtung ab. Der Zwischenring 117 seinerseits wird über den radial inneren Umfangsabschnitt des Deckelblechrings 102 unter Zwischenlage der Außendichtung 128 von dem kopfseitigen Au-ßendichtabschnitt 58 radial gegengehalten. Im Schließzustand der Verbindungseinrichtung 22 rasten die filterseitigen Rastnasen 116 jeweils in die Rastvertiefungen 56 der kopfseitigen Rastelemente 50 ein und bilden eine Rastverbindung. Beim Einrasten der Rastnasen 116 wird ein wahrnehmbares Geräusch erzeugt.

Die eingerasteten Rastnasen 116 erschweren das Öffnen der Verbindungseinrichtung 22 durch Drehen des Wechselzylinders 14 entgegen der Schließdrehrichtung 43. Die verriegelte Verriegelungseinrichtung 52 ist gegenüber Zugkräften in Öffnungsdrehrichtung belastbar. Ferner erschwert die komprimierte Innendichtung 92 aufgrund der Reibung das Öffnen der Verbindungseinrichtung 22.

Das Entfernen des Wechselfilters 14 von dem Filterkopf 12 erfolgt durch Drehen des Wechselfilters 14 entgegen der Schließdrehrichtung 43. Dabei muss zunächst die Federkraft der Federabschnitte 114, die Stützkraft der Stützabschnitte 118 und die Reibungskraft zwischen der Innendichtung 92 und der Dichtfläche 32 überwunden werden. Hierzu muss ein erhöhtes Öffnungsdrehmoment aufgebracht werden.

Beim Betrieb des Filtersystems 10 wird zu filtrierendes Motoröl durch den Einlass 16 des Filterkopfs 12 dem Einlassringraum 30 zugeführt. Von dort aus gelangt das Motoröl durch die Einlasskanäle 104 in den rohseitigen Ringraum 82 des Wechselfilters 14. Das zu filtrierende Motoröl durchströmt das Filtermedium 72 von radial außen nach radial innen und wird gereinigt. Das gereinigte Motoröl verlässt den Elementinnenraum 78 durch die Auslassöffnung 86 und gelangt in den Innenraum des Anschlusshülsenabschnitts 28, der als Ölkanal dient. Der Innenraum des Anschlusshülsenabschnitts 28 kommuniziert also fluidtechnisch mit der Auslassöffnung 86. Von dort aus strömt das gereinigte Motoröl in den Auslass 18 des Filterkopfs 12 und verlässt das Filtersystem 10.

In Figuren 4 und 5 ist ein zweites Ausführungsbeispiel eines Wechselfilters 14 gezeigt. Figur 5 zeigt dabei den Wechselfilter 14 mit einem Teilschnitt des kopfseitigen Verbindungsteils 20. Diejenigen Elemente, die zu denen des ersten Ausführungsbeispiels aus Figuren 1 bis 3 ähnlich sind, sind mit denselben Bezugszeichen versehen.

Das zweite Ausführungsbeispiel unterscheidet sich von dem ersten Ausführungsbeispiel dadurch, dass die Rastfederelemente 110 jeweils einen Stützabschnitt 218 in Form eines Stützarms aufweisen. Die Stützabschnitte 218 befinden sich auf der den Rastnasen 116 bzgl. der Filterachse 26 radial gegenüberliegenden Außenseite des entsprechenden Rastfederelements 110. Die Stützabschnitte 218 sind jeweils einstückig mit dem Federarmabschnitt 114 verbunden. Die Stützabschnitte 218 sind vom Federarmabschnitt 114 weg schräg nach radial außen und entgegen der Schließdrehrichtung 43 gerichtet.

Mit ihren freien Enden stützen sich die Stützabschnitte 218 analog zum ersten Ausführungsbeispiel jeweils an der radial inneren Umfangsseite des Zwischenrings 117 ab.

Beim zweiten Ausführungsbeispiel wird außerdem auf die Einkerbungen auf dem Innenrand des Deckelblechrings 102 verzichtet.

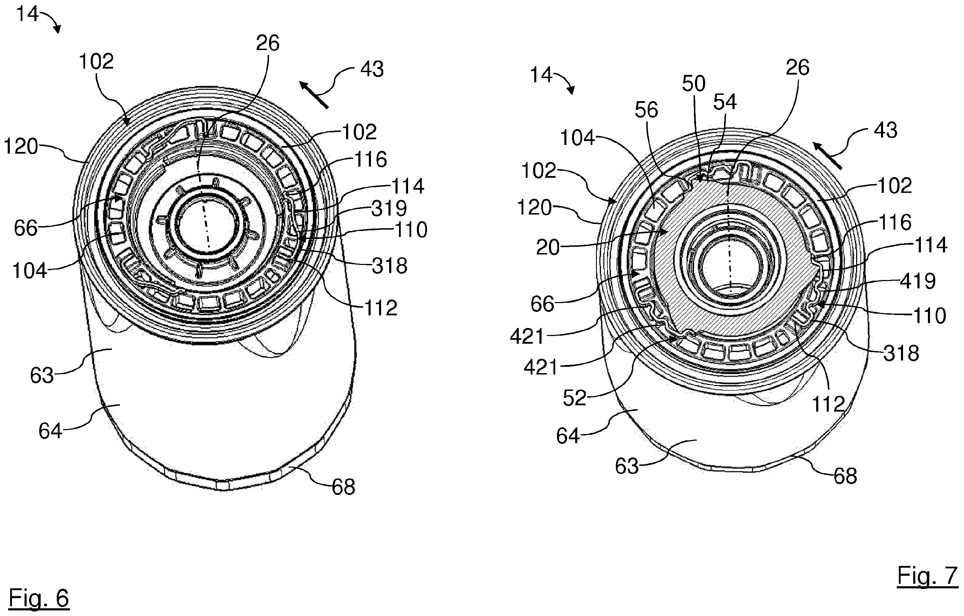

In Figur 6 ist ein drittes Ausführungsbeispiel eines Wechselfilters 14 gezeigt. Diejenigen Elemente, die zu denen des zweiten Ausführungsbeispiels aus Figuren 4 und 5 ähnlich sind, sind mit denselben Bezugszeichen versehen.

Das dritte Ausführungsbeispiel unterscheidet sich von dem zweiten Ausführungsbeispiel dadurch, dass Stützabschnitte 318 der Rastfederelemente 110 in Form von Erhebungen etwa gegenüber dem jeweiligen Halteabschnitt 112 angeordnet sind. Die Stützabschnitte 318 haben wie die Stützabschnitte 118 und 218 aus den ersten beiden Ausführungsbeispielen die Aufgabe, die filterseitigen Verriegelungsteile 108 nach radial außen gegen den Zwischenring 117 elastisch abzustützen.

Ferner sind die Federarmabschnitte 114 der Rastfederelemente 110 jeweils mit einer Profilierung 319 versehen. Die Federarmabschnitte 114 sind hierzu etwa S-förmig nach radial innen gebogen. Mit den Profilierungen 319 wird die Stabilität der Rastfederelemente 110 verbessert, so dass größere Kräfte übertragen werden können.

In Figur 7 ist ein viertes Ausführungsbeispiel eines Wechselfilters 14 gezeigt. Diejenigen Elemente, die zu denen des dritten Ausführungsbeispiels aus Figur 6 ähnlich sind, sind mit denselben Bezugszeichen versehen.

Das vierte Ausführungsbeispiel unterscheidet sich von dem dritten Ausführungsbeispiel dadurch, dass die Federarmabschnitte 114 der Rastfederelemente 110 jeweils mit einer etwas komplexeren Profilierung 419 versehen sind. Die Federarmabschnitte 114 sind hierzu mehrfach gebogen und weisen jeweils zwei in axialer Richtung betrachtet etwa U-förmige Sicken 421 auf. Mit den Sicken 421 wird die Stabilität der Rastfederelemente 110 weiter verbessert, so dass größere Kräfte übertragen werden können.

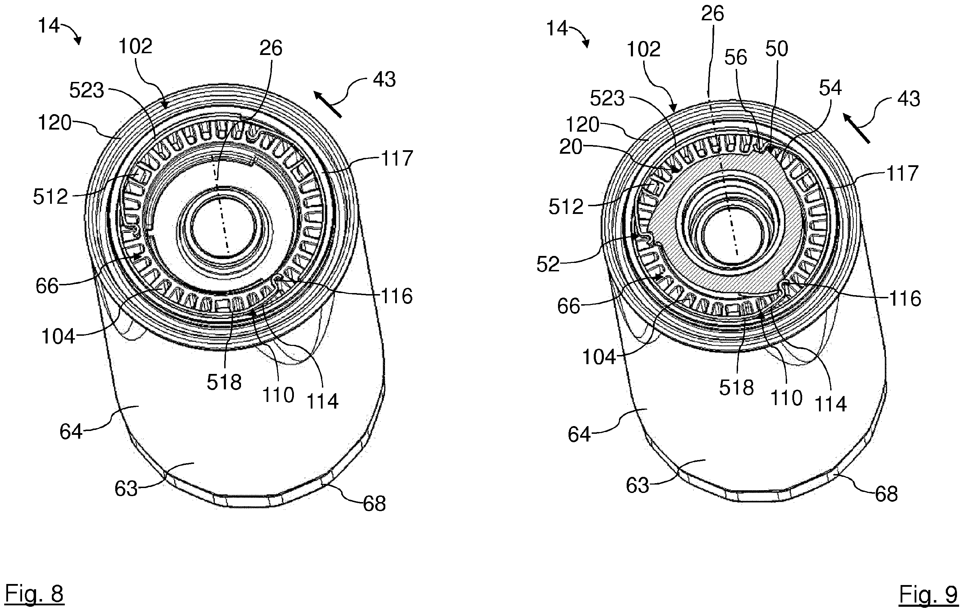

In Figuren 8 und 9 ist ein fünftes Ausführungsbeispiel eines Wechselfilters 14 gezeigt. Diejenigen Elemente, die zu denen des ersten Ausführungsbeispiels aus Figuren 1 bis 3 ähnlich sind, sind mit denselben Bezugszeichen versehen.

Das fünfte Ausführungsbeispiel unterscheidet sich von dem ersten Ausführungsbeispiel dadurch, dass die Rastfederelemente 110 einstückig aus einem umfangsmäßig zusammenhängenden Blechring 523 geformt sind. Der Blechring 523 ist mittels insgesamt drei Haltelaschen 512 mit dem Filterdeckel 66 verbunden. Die Haltelaschen 512 sind entsprechend der Halteabschnitte 112 aus dem ersten Ausführungsbeispiel umfangsmäßig verteilt und jeweils einem Federarmabschnitte 114 zugeordnet. Die Haltelaschen 512 stecken in jeweiligen Einstecköffnungen der Einlasskanäle 104, die hier exemplarisch etwa rechteckig sind.

Die Federarmabschnitte 114 weisen jeweils einen Stützabschnitt 518 zum Abstützen gegen den Zwischenring 117 auf. Die Stützabschnitte 518 erstrecken sich jeweils auf in Umfangsrichtung betrachtet gegenüberliegenden Seiten jeweils vor und hinter den Haltelaschen 512. In Schließdrehrichtung 43 betrachtet vor jeder Haltelasche 512 erstreckt sich der jeweilige Stützabschnitt 518 bis etwa auf Höhe der Rastnase 116 des vorhergehenden Rastfederelements 110. Hinter jeder Haltelasche 512 erstreckt der jeweilige Stützabschnitt 518 sich in Richtung zu der Rastnase 116 des entsprechenden Rastfederelements 110 etwa über ein Drittel der Länge des entsprechenden Federarmabschnitts 114.

## Patentansprüche

1. Wechselfilter (14), insbesondere Spin-On Filter, einer Filtervorrichtung (10) für Fluid, insbesondere Flüssigkeit, insbesondere Öl oder Kraftstoff, insbesondere einer Brennkraftmaschine, insbesondere eines Kraftfahrzeugs, wobei der Wechselfilter (14) aufweist:
- ein Filtergehäuse (63), insbesondere einen Gehäusetopf (64), in welchem wenigstens ein Filterelement (70) angeordnet ist oder sein kann,
- einen stirnseitig an dem Filtergehäuse (63) angeordneten Anschlusskörper (66), welcher mit zumindest einer Fluidöffnung, insbesondere mit zumindest einer exzentrischen Fluidöffnung (104) und mit einer mittigen Zentralöffnung (98), versehen ist,
- ein filterseitiges Verbindungsteil (108) einer Verbindungseinrichtung (22) zum lösbaren Verbinden des Wechselfilters (14) mit einem Filterkopf (12) der Filtervorrichtung (10),
- wenigstens ein filterseitiges Verriegelungsteil (110) wenigstens einer Verriegelungseinrichtung (52) zum lösbaren Verriegeln der Verbindungseinrichtung (22),
wobei das filterseitige Verbindungsteil (108) mittels einer Steck-/Drehbewegung bzgl. einer Verbindungsachse (26) mit dem Filterkopf (12) lösbar verbindbar ist, wobei das wenigstens eine filterseitige Verriegelungsteil (110) automatisch mittels der Steck-/Drehbewegung mit einem entsprechenden kopfseitigen Verriegelungsteil (50) der Verriegelungseinrichtung (52) lösbar verriegelbar ist und wobei wenigstens ein filterseitiges Verriegelungsteil (110) wenigstens einen filterseitigen Rastabschnitt (116) einer Rastverbindung zum Verrasten mit einem kopfseitigen Rastabschnitt (56) eines kopfseitigen Verriegelungsteils (50) der wenigstens einen Verriegelungseinrichtung (52) in einem Verriegelungszustand aufweist und wenigstens einen Stützabschnitt (118; 218; 318; 518) auf der dem wenigstens einen filterseitigen Rastabschnitt (116) bzgl. der Verbindungsachse (26) radial abgewandten Seite des filterseitigen Verriegelungsteils (110) aufweist zum mittelbaren oder unmittelbaren Abstützen des wenigstens einen filterseitigen Verriegelungsteils (110) gegen wenigstens einen gehäuseseitigen radial inneren Umfangsabschnitt wenigstens in radialer Richtung wenigstens im Verriegelungszustand.

2. Wechselfilter nach Anspruch 1, **dadurch gekennzeichnet, dass** der wenigstens eine Stützabschnitt (118; 218; 318; 518) die übrigen Abschnitte des filterseitigen Verriegelungsteils (110) wenigstens in der Verriegelungsposition der Verriegelungseinrichtung (52) auf der Abstützseite, insbesondere radial außen oder radial innen, radial bzgl. der Verbindungsachse (26) überragt.

3. Wechselfilter nach Anspruch 1 oder 2, **dadurch gekennzeichnet, dass** wenigstens ein Stützabschnitt (118; 218; 318; 518) wenigstens in radialer Richtung bzgl. der Verbindungsachse (26) elastisch, insbesondere federelastisch, ist.

4. Wechselfilter nach einem der vorigen Ansprüche, **dadurch gekennzeichnet, dass** wenigstens ein Stützabschnitt (118; 218) auf der dem wenigstens einen filterseitigen Rastabschnitt (116) bzgl. der Verbindungsachse (26) radial etwa gegenüberliegenden Seite des entsprechenden filterseitigen Verriegelungsteils (110) angeordnet ist und/oder angreift und/oder wenigstens ein Stützabschnitt (118; 318; 518) versetzt zu wenigstens einem filterseitigen Rastabschnitt (116) des entsprechenden filterseitigen Verriegelungsteils (110) angeordnet ist.

5. Wechselfilter nach einem der vorigen Ansprüche, **dadurch gekennzeichnet, dass** wenigstens ein Stützabschnitt (218) als Fortsatz, insbesondere Stützarm, realisiert ist.

6. Wechselfilter nach einem der vorigen Ansprüche, **dadurch gekennzeichnet, dass** wenigstens ein Zwischenelement, insbesondere ein Zwischenring (117), vorgesehen ist, das bzgl. der Verbindungsachse (26) radial zwischen wenigstens einem Stützabschnitt (118; 218; 318; 518) und einem gehäuseseitigen Umfangsabschnitt, insbesondere einem Umfangsabschnitt eines Gehäusedeckels (102) und/oder des Anschlusskörpers, angeordnet ist.

7. Wechselfilter nach einem der vorigen Ansprüche, **dadurch gekennzeichnet, dass** wenigstens ein Zwischenelement (117) elastisch oder starr ist.

8. Wechselfilter nach einem der vorigen Ansprüche, **dadurch gekennzeichnet, dass** wenigstens ein filterseitiges Verriegelungsteil (110) wenigstens in radialer Richtung bzgl. der Verbindungsachse (26) wenigstens teilweise elastisch ist.

9. Wechselfilter nach einem der vorigen Ansprüche, **dadurch gekennzeichnet, dass** wenigstens ein filterseitiges Verriegelungsteil (110) separat und/oder wenigstens zwei filterseitige Verriegelungsteile (110) zusammenhängend, insbesondere einstückig zusammenhängend, mittelbar oder unmittelbar mit dem Filtergehäuse (63), insbesondere dem Anschlusskörper und/oder einen Deckel oder Deckelteil (102), verbunden ist.

10. Wechselfilter nach einem der vorigen Ansprüche, **dadurch gekennzeichnet, dass** wenigstens ein filterseitiges Verriegelungsteil (110) wenigstens einen insbesondere elastisch bewegbaren, insbesondere verformbaren, filterseitigen Rastabschnitt (116), insbesondere eine Rastnase, einen Hakenabschnitt oder eine Rastaufnahme, aufweist.

11. Wechselfilter nach einem der vorigen Ansprüche, **dadurch gekennzeichnet, dass** wenigstens ein filterseitiges Verriegelungsteil (110) mit wenigstens einer Profilierung (319; 419), insbesondere mit Sicken (421) und/oder Biegungen, versehen ist.

12. Filtervorrichtung (10) für Fluid, insbesondere Flüssigkeit, insbesondere Öl oder Kraftstoff, insbesondere einer Brennkraftmaschine, insbesondere eines Kraftfahrzeugs, mit wenigstens einem Wechselfilter (14), wobei die Filtervorrichtung (10) wenigstens einen Wechselfilter (14), insbesondere nach einem der vorigen Ansprüche, insbesondere einem Spin-On Filter, umfasst, der aufweist:
- ein Filtergehäuse (63), insbesondere einen Gehäusetopf (64), in welchem wenigstens ein Filterelement (70) angeordnet ist oder sein kann,
- einen stirnseitig an dem Filtergehäuse (63) angeordneten Anschlusskörper (66), welcher mit zumindest einer Fluidöffnung, insbesondere mit zumindest einer exzentrischen Fluidöffnung (104) und mit einer mittigen Zentralöffnung (98), versehen ist,
- ein filterseitiges Verbindungsteil (108) einer Verbindungseinrichtung (22) zum lösbaren Verbinden des Wechselfilters (14) mit einem Filterkopf (12) der Filtervorrichtung (10),
- wenigstens ein filterseitiges Verriegelungsteil (110) wenigstens einer Verriegelungseinrichtung (52) zum lösbaren Verriegeln der Verbindungseinrichtung (22),
wobei das filterseitige Verbindungsteil (108) mittels einer Steck-/Drehbewegung bzgl. einer Verbindungsachse (26) mit dem Filterkopf (12) lösbar verbindbar ist, wobei das wenigstens eine filterseitige Verriegelungsteil (110) automatisch mittels der Steck-/Drehbewegung mit einem entsprechenden kopfseitigen Verriegelungsteil (50) der Verriegelungseinrichtung (52) lösbar verriegelbar ist und wobei wenigstens ein filterseitiges Verriegelungsteil (110) wenigstens einen filterseitigen Rastabschnitt (116) einer Rastverbindung zum Verrasten mit einem kopfseitigen Rastabschnitt (56) eines kopfseitigen Verriegelungsteils (50) der wenigstens einen Verriegelungseinrichtung (52) in einem Verriegelungszustand aufweist und wenigstens einen Stützabschnitt (118; 218; 318; 518) auf der dem wenigstens einen filterseitigen Rastabschnitt (116) bzgl. der Verbindungsachse (26) radial abgewandten Seite des filterseitigen Verriegelungsteils (110) aufweist zum mittelbaren oder unmittelbaren Abstützen des wenigstens einen filterseitigen Verriegelungsteils (110) gegen wenigstens einen gehäuseseitigen radial inneren Umfangsabschnitt wenigstens in radialer Richtung wenigstens im Verriegelungszustand.

## Claims

1. Exchangeable filter (14), in particular spin-on filter, of a filter apparatus (10) for fluid, in particular liquid, in particular oil or fuel, in particular of an internal combustion engine, in particular of a motor vehicle, wherein the exchangeable filter (14) features:
- a filter housing (63), in particular a housing pot (64), in which at least one filter element (70) is or can be disposed,
- a connecting body (66) disposed frontally on the filter housing (63), which is provided with at least one fluid opening, in particular with at least one eccentric fluid opening (104), and with a central opening (98) located in the center,
- a filter-sided connecting part (108) of a connecting means (22) for detachably connecting the exchangeable filter (14) with a filter head (12) of the filter apparatus (10),
- at least one filter-sided locking part (110) of at least one locking means (52) for detachably locking the connecting means (22),
wherein the filter-sided connecting part (108) can be detachably connected by means of a plug-in/rotational motion with respect to a connecting axis (26) to the filter head (12), wherein the at least one filter-sided locking part (110) can be locked automatically by means of the plug-in/rotational motion with a corresponding head-sided locking part (50) of the locking means (52) and wherein at least one filter-sided locking part (110) features at least one filter-sided latching portion (116) of a latching connection for latching with a head-sided latching portion (56) of a head-sided locking part (50) of the at least one locking means (52) in a locked state, and features at least one support portion (118; 218; 318; 518) on the side of the the filter-sided locking part (110) facing radially away from the at least one filter-sided latching portion (116) with respect to the connecting axis (26) for indirectly or directly supporting the at least one filter-sided locking part (110) with respect to at least one housing-sided radially inner peripheral portion at least in the radial direction at least in the locked state.

2. Exchangeable filter according to claim 1, **characterized in that** the at least one support portion (118; 218; 318; 518) projects radially beyond the remaining portions of the filter-sided locking part (110) at least in the locking position of the locking means (52) on the support side, in particular radially outside or radially inside, with respect to the connecting axis (26).

3. Exchangeable filter according to claim 1 or 2, **characterized in that** at least one support portion (118; 218; 318; 518) is elastic, in particular spring-elastic, at least in the radial direction with respect to the connecting axis (26).

4. Exchangeable filter according to one of the previous claims, **characterized in that** at least one support portion (118; 218) is disposed on the side of the corresponding filter-sided locking part (110) radially approximately opposite to the at least one filter-sided latching portion (116) with respect to the connecting axis (26) and/or engages and/or at least one support portion (118; 318; 518) is disposed offset with respect to at least one filter-sided latching portion (116) of the corresponding filter-sided locking part (110).

5. Exchangeable filter according to one of the previous claims, **characterized in that** at least one support portion (218) is realized as an extension, in particular support arm.

6. Exchangeable filter according to one of the previous claims, **characterized in that** at least one intermediate member, in particular an intermediate ring (117), is provided, which, with respect to the connecting axis (26), is disposed radially between at least one support portion (118; 218; 318; 518) and a housing-sided peripheral portion, in particular a peripheral portion of a housing cover (102) and/or of the connecting body.

7. Exchangeable filter according to one of the previous claims, **characterized in that** at least one intermediate member (117) is elastic or rigid.

8. Exchangeable filter according to one of the previous claims, **characterized in that** at least one filter-sided locking part (110) is at least partially elastic at least in the radial direction with respect to the connecting axis (26).

9. Exchangeable filter according to one of the previous claims, **characterized in that** at least one filter-sided locking part (110) is connected separately and/or at least two filter-sided locking parts (110) are connected, in particular connected integrally, indirectly or directly to the filter housing (63), in particular to the connecting body and/or to a cover or cover part (102).

10. Exchangeable filter according to one of the previous claims, **characterized in that** at least one filter-sided locking part (110) features at least one, in particular elastically movable, in particular deformable, filter-sided latching portion (116), in particular a latching lug, a hook portion or a latching receptacle.

11. Exchangeable filter according to one of the previous claims, **characterized in that** at least one locking part (110) on the filter side is provided with at least one profiling (319; 419), in particular with beads (421) and/or bends.

12. Filter apparatus (10) for fluid, in particular liquid, in particular oil or fuel, in particular of an internal combustion engine, in particular of a motor vehicle, having at least one exchangeable filter (14), wherein the filter apparatus (10) comprises at least one exchangeable filter (14), in particular according to one of the previous claims, in particular a spin-on filter, which features:
- a filter housing (63), in particular a housing pot (64), in which at least one filter element (70) is or can be disposed,
- a connecting body (66) disposed frontally on the filter housing (63), which is provided with at least one fluid opening, in particular with at least one eccentric fluid opening (104), and with a central opening (98) located in the center,
- a filter-sided connecting part (108) of a connecting means (22) for detachably connecting the exchangeable filter (14) with a filter head (12) of the filter apparatus (10),
- at least one filter-sided locking part (110) of at least one locking means (52) for detachably locking the connecting means (22),
wherein the filter-sided connecting part (108) can be detachably connected by means of a plug-in/rotational motion with respect to a connecting axis (26) to the filter head (12), wherein the at least one filter-sided locking part (110) can be locked automatically by means of the plug-in/rotational motion with a corresponding head-sided locking part (50) of the locking means (52) and wherein at least one filter-sided locking part (110) features at least one filter-sided latching portion (116) of a latching connection for latching with a head-sided latching portion (56) of a head-sided locking part (50) of the at least one locking means (52) in a locked state, and features at least one support portion (118; 218; 318; 518) on the side of the the filter-sided locking part (110) facing radially away from the at least one filter-sided latching portion (116) with respect to the connecting axis (26) for indirectly or directly supporting the at least one filter-sided locking part (110) with respect to at least one housing-sided radially inner peripheral portion at least in the radial direction at least in the locked state.

## Revendications

1. Filtre interchangeable (14), notamment filtre spin-on, d'un dispositif de filtration (10) pour des fluides, notamment pour des liquides, notamment pour de l'huile ou du carburant, notamment d'un moteur à combustion interne, notamment d'un véhicule automobile, le filtre interchangeable (14) présentant :
- un boîtier de filtre (63), notamment un pot de boîtier (64), dans lequel est ou peut être disposé au moins un élément filtrant (70),
- un corps de raccordement (66) disposé sur la face frontale sur le boîtier de filtre (63) et pourvu d'au moins une ouverture à fluide, notamment d'au moins une ouverture à fluide excentrique (104) et d'une ouverture centrale au milieu (98),
- une pièce de raccordement (108) côté filtre d'un dispositif de raccordement (22) destiné à relier le filtre interchangeable (14) de manière amovible à une tête de filtre (12) du dispositif de filtration (10),
- au moins une pièce de verrouillage côté filtre (110) d'au moins un dispositif de verrouillage (52) pour verrouiller de manière amovible le dispositif de raccordement (22),
la pièce de raccordement (108) côté filtre pouvant être raccordée de manière amovible à la tête de filtre (12) par un mouvement d'emboîtement et de rotation par rapport à l'axe de liaison (26), l'élément de verrouillage (110) côté filtre, au moins au nombre d'un, pouvant être verrouillé automatiquement, de manière amovible, par un mouvement d'emboîtement et de rotation avec un élément de verrouillage correspondant (50) côté tête du dispositif de verrouillage (52), et au moins un élément de verrouillage (110) côté filtre présentant au moins une section d'encliquetage (116) côté filtre d'un raccord à crans destinée à l'encliquetage avec une section d'encliquetage (56) côté tête d'un élément de verrouillage (50) côté tête du dispositif de verrouillage (52), au moins au nombre d'un, dans un état de verrouillage, et présentant au moins une section d'appui (118; 218; 318; 518) sur le côté de l'élément de verrouillage (110) côté filtre orientée à l'opposé en sens radial de la section d'encliquetage (116) côté filtre, au moins au nombre d'une, par rapport à l'axe de liaison (26), destinée à étayer directement ou indirectement l'élément de verrouillage (110) côté filtre, au moins au nombre d'un, par rapport à au moins une section circonférentielle intérieure en sens radial, côté boîtier, au moins en sens radial, au moins à l'état verrouillé.

2. Filtre interchangeable selon la revendication 1, **caractérisé en ce que** la section d'appui (118; 218; 318; 518), au moins au nombre d'une, dépasse, notamment à l'extérieur en sens radial ou à l'intérieur en sens radial, en sens radial par rapport à l'axe de liaison (26), des autres sections de l'élément de verrouillage (110) côté filtre au moins en position de verrouillage de l'élément de verrouillage (52) côté appui.

3. Filtre interchangeable selon la revendication 1 ou 2, **caractérisé en ce qu**'au moins une section d'appui (118; 218; 318; 518) présente une élasticité, notamment une élasticité de ressort, au moins en sens radial par rapport à l'axe de liaison (26).

4. Filtre interchangeable selon l'une des revendications précédentes, **caractérisé en ce qu**'au moins une section d'appui (118; 218) est disposée du côté de l'élément de verrouillage (110) correspondant côté filtre qui est approximativement opposé en sens radial à la section d'encliquetage (116) coté filtre, au moins au nombre d'une, par rapport à l'axe de liaison (26) et/ou est en prise dans ce côté et/ou qu'au au moins une section d'appui (118; 318; 518) est disposée de manière décalée par rapport à au moins une section d'encliquetage (116) côté filtre de l'élément de verrouillage (110) correspondant coté filtre.

5. Filtre interchangeable selon l'une des revendications précédentes, **caractérisé en ce qu**'au moins une section d'appui (218) est réalisée en tant que prolongement, notamment en tant que bras d'appui.

6. Filtre interchangeable selon l'une des revendications précédentes, **caractérisé en ce qu**'au moins un élément intermédiaire, notamment une bague intermédiaire (117), est prévu, lequel est disposé en sens radial par rapport à l'axe de liaison (26) entre au moins une section d'appui (118; 218; 318; 518) et une section circonférentielle côté boîtier, notamment une section circonférentielle d'un couvercle de boîtier (102) et/ou du corps de raccordement.

7. Filtre interchangeable selon l'une des revendications précédentes, **caractérisé en ce qu**'au moins un élément intermédiaire (117) est élastique ou rigide.

8. Filtre interchangeable selon l'une des revendications précédentes, **caractérisé en ce qu**'au moins un élément de verrouillage (110) côté filtre est au moins partiellement élastique au moins en sens radial par rapport à l'axe de liaison (26).

9. Filtre interchangeable selon l'une des revendications précédentes, **caractérisé en ce qu'**au moins un élément de verrouillage (110) côté filtre est relié de manière séparée et/ou au moins deux éléments de verrouillage (110) côté filtre sont interconnectés, notamment interconnectés d'un seul tenant, directement ou indirectement, au boîtier de filtre (63), notamment au corps de raccordement et/ou à un couvercle ou une partie de couvercle (102).

10. Filtre interchangeable selon l'une des revendications précédentes, caractérisé **en ce qu**'au moins un élément de verrouillage (110) côté filtre présente au moins une section d'encliquetage (116) coté filtre qui est notamment mobile de manière élastique, notamment déformable, notamment un ergot d'encliquetage, une section à crochet ou un logement d'encliquetage.

11. Filtre interchangeable selon l'une des revendications précédentes, **caractérisé en ce qu**'au moins un élément de verrouillage (110) côté filtre est pourvu d'au moins un profilage (319; 419), notamment de bourrelets (421) et/ou de courbures.

12. Dispositif de filtration (10) pour des fluides, notamment pour des liquides, notamment pour de l'huile ou du carburant, notamment d'un moteur à combustion interne, notamment d'un véhicule automobile, avec au moins un filtre interchangeable (14), le dispositif de filtration (10) comprenant au moins un filtre interchangeable (14), notamment selon l'une des revendications précédentes, notamment un filtre spin-on, lequel présente :
- un boîtier de filtre (63), notamment un pot de boîtier (64), dans lequel au moins un élément filtrant (70) est ou peut être disposé,
- un corps de raccordement (66) disposé sur la face frontale sur le boîtier de filtre (63) et pourvu d'au moins une ouverture à fluide, notamment d'au moins une ouverture à fluide excentrique (104) et d'une ouverture centrale au milieu (98),
- une pièce de raccordement (108) côté filtre d'un dispositif de raccordement (22) destiné à relier le filtre interchangeable (14) de manière amovible à une tête de filtre (12) du dispositif de filtration (10),
- au moins une pièce de verrouillage côté filtre (110) d'au moins un dispositif de verrouillage (52) pour verrouiller de manière amovible le dispositif de raccordement (22),
la pièce de raccordement (108) côté filtre pouvant être raccordée de manière amovible à la tête de filtre (12) par un mouvement d'emboîtement et de rotation par rapport à l'axe de liaison (26), l'élément de verrouillage (110) côté filtre, au moins au nombre d'un, pouvant être verrouillé automatiquement, de manière amovible, par un mouvement d'emboîtement et de rotation avec un élément de verrouillage correspondant (50) côté tête du dispositif de verrouillage (52), et au moins un élément de verrouillage (110) côté filtre présentant au moins une section d'encliquetage (116) côté filtre d'un raccord à crans destinée à l'encliquetage avec une section d'encliquetage (56) côté tête d'un élément de verrouillage (50) côté tête du dispositif de verrouillage (52), au moins au nombre d'un, dans un état de verrouillage, et présentant au moins une section d'appui (118; 218; 318; 518) sur le côté de l'élément de verrouillage (110) côté filtre orientée à l'opposé en sens radial de la section d'encliquetage (116) côté filtre, au moins au nombre d'une, par rapport à l'axe de liaison (26), destinée à étayer directement ou indirectement l'élément de verrouillage (110) côté filtre, au moins au nombre d'un, par rapport à au moins une section circonférentielle intérieure en sens radial, côté boîtier, au moins en sens radial, au moins à l'état verrouillé.
